# EUROPEAN PATENT APPLICATION

(11) **EP 4 447 560 A1**
(43) Date of publication of application: **16.10.2024**
(21) Application number: 22913938.1
(22) Date of filing: 25.11.2022
(51) Int. Cl.: H04W 48/08, H04W 76/10

(54) **SUBSCRIPTION MANAGEMENT METHOD AND RELATED APPARATUS**

(30) Priority: 31.12.2021 CN 202111676517
(71) Applicant: Huawei Technologies Co., Ltd., Shenzhen, Guangdong 518129 (CN)
(72) Inventor: XING, Weijun, Shenzhen, Guangdong 518129 (CN); WU, Shaoyun, Shenzhen, Guangdong 518129 (CN); WANG, Yang, Shenzhen, Guangdong 518129 (CN); YAN, Xueqiang, Shenzhen, Guangdong 518129 (CN); ZHAO, Mingyu, Shenzhen, Guangdong 518129 (CN)
(74) Representative: Pfenning, Meinig & Partner mbB
(86) International application number: PCT/CN2022/134369
(87) International publication number: WO 2023/124680

(57) **Abstract**

This application discloses a subscription management method and a related apparatus, and relates to the field of communication technologies. The method includes: A first network device obtains a first message, where the first message includes identifier information corresponding to a terminal device. The first network device sends a second message to a second network device, where the second message is for requesting subscription information corresponding to the identifier information, the subscription information is for determining a target network function, and the target network function has a network capability indicated by the subscription information. In this method, the subscription information of the terminal device can be forwarded without using a network element. This simplifies an information transmission procedure between networks, saves a large quantity of resources, and improves information security.

## Description

This application claims priority to Chinese Patent Application No. 2021116765179, filed with the China National Intellectual Property Administration on December 31, 2021 and entitled "SUBSCRIPTION MANAGEMENT METHOD AND RELATED APPARATUS", which is incorporated herein by reference in its entirety.

### TECHNICAL FIELD

This application relates to the field of communication technologies, and in particular, to a subscription management method and a related apparatus.

### BACKGROUND

With rapid development of a 5th generation (5th generation, 5G) communication system, types of terminal devices are increasing. In addition to common mobile phones and tablet computers, the terminal devices may further include an Internet of Things device, a home gateway device for home broadband access, and the like. The terminal device performs network access by using an access network based on subscription information corresponding to the terminal device. The subscription information is centrally managed by a telecom operator, and records information identifying that the terminal device is allowed to access the network. A plurality of function network elements in a 5G core network then separately obtain subscription information of the terminal device, to provide corresponding function services. For example, an access and mobility management function network element provides function services such as registration, access, and tracking area update procedures for the terminal device by obtaining access-related subscription of the terminal device, and a session management function network element provides a session procedure function service for the terminal device by obtaining session-related subscription of the terminal device.

However, the subscription information of the terminal device consumes a large quantity of resources in a transmission process, and there is a security attack problem. Consequently, information security is low.

### SUMMARY

Embodiments of this application provide a subscription management method and a related apparatus, so that subscription information of a terminal device can be forwarded without using a network element. This simplifies an information transmission procedure between networks, saves a large quantity of resources, and improves information security.

According to a first aspect, an embodiment of this application provides a subscription management method. The method includes:

A first network device obtains a first message, where the first message includes identifier information corresponding to a terminal device.

The first network device sends a second message to a second network device, where the second message is for requesting subscription information corresponding to the identifier information, the subscription information is for determining a target network function, and the target network function has a network capability indicated by the subscription information.

In this embodiment of this application, the subscription management method is provided. Specifically, the first network device obtains the first message, where the first message includes but is not limited to the identifier information corresponding to the terminal device; and the first network device sends the second message to the second network device in response to the first message, where the second message is for requesting the subscription information corresponding to the identifier information of the terminal device. The first network device is a network control function device, or a network device integrating a network control function, for example, an access management network element, may manage a resource of a user service node, and may specifically perform operations such as generation, change, and elimination on the user service node. The user service node may be understood as a core network element that integrates a core network control function and provides a dedicated service for the terminal device, or may be understood as a type of cloud server. The terminal device may orchestrate, on the user service node, resources provided by an operator. The second network device is a unified data management device, and may be specifically a data plane network element in a core network, and is configured to manage data such as the subscription information and the identifier information of the terminal device. Correspondingly, the second network device stores subscription or authorization data of the terminal device, and stores application-related data.

A current core network is designed based on network element logic. Different function network elements serving the terminal device (user) need to separately obtain the subscription information of the terminal device from the data plane network element, to provide a corresponding service for the terminal device. However, in a process in which the subscription information of the terminal device is transmitted between the foregoing different function network elements, a large quantity of resources are consumed, and there is a security attack problem. Consequently, information security is low.

However, in this embodiment of this application, the first network device requests, based on the identifier information of the terminal device, the second network device to obtain the subscription information corresponding to the identifier information. A network function granularity of the subscription information may be used for determining the target network function, and the determined target network function has the network capability corresponding to the network function granularity of the subscription information, so that the target network function can provide, for the terminal device, services for a plurality of services required by the terminal device. The target network function in this embodiment of this application may be specifically the user service node. In comparison with a conventional technology, in this embodiment of this application, the subscription information does not need to be transmitted between different function network elements. This simplifies an information transmission procedure between networks, saves the large quantity of resources, reduces a security attack during information transmission, and improves the information security.

In a possible implementation, the subscription information includes two or more parameters, and the two or more parameters represent a network capability for providing services for two or more services.

In this embodiment of this application, a possible implementation of the network function granularity of the subscription information is provided. Specifically, the subscription information includes the two or more parameters, where each parameter represents a network capability for providing a corresponding service corresponding to a service requested by the terminal device, and the two or more parameters represent the network capability for providing the services for the two or more services requested by the terminal device. The parameters included in the subscription information are classified based on the network function granularity. Specifically, the parameters in the subscription information may be classified, based on a service feature of a service, into a capability parameter for supporting a proximity service, a capability parameter for supporting a location service, and capability parameters for supporting other service features. Alternatively, the parameters in the subscription information may be classified, based on an access end point of a service, into a capability parameter for supporting storage of a data network name in unified data management, a capability parameter for supporting network slice selection assistance information, and capability parameters for supporting other services. A classification manner of the parameters in the subscription information is not specifically limited in this embodiment of this application. In this embodiment of this application, based on the network function granularity-based subscription information, the subscription information does not need to be transmitted between different function network elements. This simplifies the information transmission procedure between the networks, saves the large quantity of resources, reduces the security attack during information transmission, and improves the information security.

In a possible implementation, the method further includes:
obtaining the subscription information; and
establishing a connection relationship with the target network function based on the subscription information.

In this embodiment of this application, a possible implementation of establishing the connection relationship with the target network function is provided. Specifically, after the subscription information is obtained from the second network device, the connection relationship is established with the target network function based on the subscription information. The two or more parameters in the subscription information represent the network capability for providing the services for the two or more services required by the terminal device. Correspondingly, the target network function that has the network capability for providing the services for the two or more services may be determined based on the subscription information, to establish the connection relationship with the target network function. The target network function in this embodiment of this application may be specifically the user service node. According to this embodiment of this application, the connection relationship may be established with the target network function, to manage a resource of the target network function.

In a possible implementation, the first message further includes a network function creation message, and the network function creation message indicates to create, when the target network function does not exist, a network function that has the network capability indicated by the subscription information as the target network function.

In this embodiment of this application, the first message further includes the network function creation message. Specifically, the first network device searches, based on the obtained subscription information, existing network functions in the network for a network function corresponding to the subscription information, and determines the network function as the target network function, to provide a corresponding dedicated service for the terminal device. When the terminal device currently does not have the corresponding network function to provide the service for the terminal device, or there is no network function corresponding to the subscription information in the existing network functions, the network function creation message in the first message indicates to create a network function that has the network capability indicated by the subscription information as the target network function. The target network function in this embodiment of this application may be specifically the user service node. According to this embodiment of this application, the target network function can be effectively determined, to provide the service of the required service for the terminal device.

In a possible implementation, before sending the second message to the second network device, the method further includes:
sending an authentication request to the second network device, where the authentication request is for requesting to perform authentication on the identifier information, or is for requesting to perform authentication and authorization on an operation of obtaining the subscription information.

In this embodiment of this application, a possible implementation of performing authentication on the identifier information or the operation of obtaining the subscription information is provided. Specifically, the authentication request is sent to the second network device, to request the second network device to perform authentication on the identifier information, or to request to perform authentication and authorization on the subsequent operation of obtaining the subscription information. This ensures that the operation of obtaining the subscription information is secure and reliable, and improves security and reliability of subscription management.

In a possible implementation, the second message includes authentication information of the second network device, and the authentication information represents that the authentication on the identifier information is completed, or the authentication and the authorization on the operation of obtaining the subscription information are completed.

In this embodiment of this application, that the second message includes the authentication information of the second network device is specifically: After the authentication request is sent to the second network device, the second network device allows the authentication request, and returns the authentication information to the first network device, representing that the authentication on the identifier information is completed, or the authentication and the authorization on the operation of obtaining the subscription information are completed. In this case, the second message sent by the first network device to the second network device includes the authentication information, representing that the first network device has been authorized to perform the operation of obtaining the subscription information, and can successfully obtain the subscription information. This ensures that the operation of obtaining the subscription information is secure and reliable, and improves the security and the reliability of the subscription management.

In a possible implementation, the method further includes:
sending information about the target network function to the terminal device, where the information about the target network function is for the terminal device to establish the connection relationship with the target network function, and there is a mapping relationship between the information about the target network function and the identifier information of the terminal device.

In this embodiment of this application, a possible implementation of establishing the connection relationship between the terminal device and the target network function is provided. Specifically, after the target network function is determined, the information about the target network function is sent to the terminal device, where the information about the target network function is for the terminal device to establish the connection relationship with the target network function, so that the target network function can provide, for the terminal device, the dedicated service required by the terminal device. Because the target network function is a network function that provides the dedicated service for the terminal device, there is the mapping relationship between the information about the target network function and the identifier information of the terminal device. The target network function in this embodiment of this application may be specifically the user service node.

In a possible implementation, the first message further includes type information of the network function, and the type information of the network function indicates the network function requested by the terminal device.

In a possible implementation, the second message is further for requesting policy information corresponding to the identifier information, and the policy information is for determining the target network function.

According to a second aspect, an embodiment of this application provides a subscription management method. The method includes:

A second network device obtains a second message sent by a first network device, where the second message is for requesting subscription information corresponding to identifier information of a terminal device, the subscription information is for determining a target network function, and the target network function has a network capability indicated by the subscription information.

The second network device sends the subscription information to the first network device based on the second message.

In this embodiment of this application, a subscription management method is provided. Specifically, the second network device obtains the second message sent by the first network device, where the second message is for requesting the subscription information corresponding to the identifier information of the terminal device. The second network device sends, to the first network device in response to the second message, the subscription information corresponding to the identifier information of the terminal device, where the subscription information may determine the target network function, and the target network function may be used for providing services for a plurality of services requested by the terminal device. The first network device is a network control function device, or a network device integrating a network control function, for example, an access management network element, may manage a resource of a user service node, and may specifically perform operations such as generation, change, and elimination on the user service node. The user service node may be understood as a core network element that integrates a core network control function and provides a dedicated service for the terminal device, or may be understood as a type of cloud server. The terminal device may orchestrate, on the user service node, resources provided by an operator. The second network device is a unified data management device, and may be specifically a data plane network element in a core network, and is configured to manage data such as the subscription information and the identifier information of the terminal device. Correspondingly, the second network device stores subscription or authorization data of the terminal device, and stores application-related data.

A current core network is designed based on network element logic. Different function network elements serving the terminal device (user) need to separately obtain the subscription information of the terminal device from the data plane network element, to provide a corresponding service for the terminal device. However, in a process in which the subscription information of the terminal device is transmitted between the foregoing different function network elements, a large quantity of resources are consumed, and there is a security attack problem. Consequently, information security is low.

However, in this embodiment of this application, the second network device sends, to the first network device in response to the second message, the subscription information corresponding to the identifier information of the terminal device, and the network function granularity-based subscription information may be used for determining the target network function. The determined target network function has the network capability corresponding to the network function granularity of the subscription information, so that the target network function can provide, for the terminal device, the services for the plurality of services required by the terminal device. The target network function in this embodiment of this application may be specifically the user service node. In comparison with a conventional technology, in this embodiment of this application, the subscription information does not need to be transmitted between different function network elements. This simplifies an information transmission procedure between networks, saves the large quantity of resources, reduces a security attack during information transmission, and improves the information security.

In a possible implementation, the subscription information includes two or more parameters, and the two or more parameters represent a network capability for providing services for two or more services.

In this embodiment of this application, a possible implementation of the network function granularity of the subscription information is provided. Specifically, the subscription information includes the two or more parameters, where each parameter represents a network capability for providing a corresponding service corresponding to a service requested by the terminal device, and the two or more parameters represent the network capability for providing the services for the two or more services requested by the terminal device. The parameters included in the subscription information are classified based on the network function granularity. Specifically, the parameters in the subscription information may be classified, based on a service feature of a service, into a capability parameter for supporting a proximity service, a capability parameter for supporting a location service, and capability parameters for supporting other service features. Alternatively, the parameters in the subscription information may be classified, based on an access end point of a service, into a capability parameter for supporting storage of a data network name in unified data management, a capability parameter for supporting network slice selection assistance information, and capability parameters for supporting other services. A classification manner of the parameters in the subscription information is not specifically limited in this embodiment of this application. In this embodiment of this application, based on the network function granularity-based subscription information, the subscription information does not need to be transmitted between different function network elements. This simplifies the information transmission procedure between the networks, saves the large quantity of resources, reduces the security attack during information transmission, and improves the information security.

In a possible implementation, before obtaining the second message sent by the first network device, the method further includes:
obtaining an authentication request sent by the first network device, where the authentication request is for requesting to perform authentication on the identifier information, or is for requesting to perform authentication and authorization on an operation of obtaining the subscription information by the first network device; and
sending authentication information to the first network device in response to the authentication request, where the authentication information represents that the authentication on the identifier information is completed, or the authentication and the authorization on the operation of obtaining the subscription information by the first network device are completed.

In this embodiment of this application, a possible implementation of performing authentication on the identifier information or the operation of obtaining the subscription information is provided. Specifically, the authentication request sent by the first network device is obtained, and the authentication information is sent to the first network device in response to the authentication request. The authentication information represents that the authentication on the identifier information is completed, or the authentication and the authorization on the operation of obtaining the subscription information by the first network device are completed. This ensures that the operation of obtaining the subscription information is secure and reliable, and improves security and reliability of subscription management.

In a possible implementation, the sending the subscription information to the first network device based on the second message includes:
when the second message includes the authentication information of the second network device, sending the subscription information to the first network device, where the authentication information represents that the authentication on the identifier information is completed, or the authentication and the authorization on the operation of obtaining the subscription information are completed.

In this embodiment of this application, a possible implementation of sending the subscription information to the first network device is provided. Specifically, when the second message includes the authentication information of the second network device, the subscription information is sent to the first network device. The second network device returns the authentication information to the first network device only after completing the authentication on the identifier information or completing the authentication and the authorization on the operation of obtaining the subscription information. The second message includes the authentication information, representing that the first network device has been authorized to perform the operation of obtaining the subscription information. Therefore, the subscription information may be sent to the first network device. This ensures that the operation of obtaining the subscription information is secure and reliable, and improves the security and the reliability of the subscription management.

According to a third aspect, an embodiment of this application provides a subscription management method. The method includes:

A terminal device sends a first message to a first network device, where the first message includes identifier information corresponding to the terminal device, subscription information corresponding to the identifier information is for determining a target network function, and the target network function has a network capability indicated by the subscription information.

The terminal device obtains information that is about the target network function and that is sent by the first network device.

In this embodiment of this application, a subscription management method is provided. Specifically, the terminal device sends the first message to the first network device, where the first message includes the identifier information of the terminal device; and then the terminal device obtains the information that is about the target network function and that is sent by the first network device. The target network function has the network capability indicated by the subscription information corresponding to the identifier information, and may provide corresponding services for a plurality of services requested by the terminal device. The first network device is a network control function device, or a network device integrating a network control function, for example, an access management network element, may manage a resource of a user service node, and may specifically perform operations such as generation, change, and elimination on the user service node. The user service node may be understood as a core network element that integrates a core network control function and provides a dedicated service for the terminal device, or may be understood as a type of cloud server. The terminal device may orchestrate, on the user service node, resources provided by an operator.

A current core network is designed based on network element logic. Different function network elements serving the terminal device (user) need to separately obtain the subscription information of the terminal device from the data plane network element, to provide a corresponding service for the terminal device. However, in a process in which the subscription information of the terminal device is transmitted between the foregoing different function network elements, a large quantity of resources are consumed, and there is a security attack problem. Consequently, information security is low.

However, in this embodiment of this application, the first message sent by the terminal device to the first network device includes the identifier information corresponding to the terminal device, the subscription information corresponding to the identifier information is for determining the target network function, and the obtained the target network function sent by the first network device may provide the corresponding services for the plurality of services requested by the terminal device. The target network function in this embodiment of this application may be specifically the user service node. In comparison with a conventional technology, in this embodiment of this application, the terminal device does not need to obtain different function network elements to provide corresponding services. This simplifies an information transmission procedure between networks, saves the large quantity of resources, reduces a security attack during information transmission, and improves the information security.

In a possible implementation, the subscription information includes two or more parameters, and the two or more parameters represent a network capability for providing services for two or more services.

In this embodiment of this application, a possible implementation of a network function granularity of the subscription information is provided. Specifically, the subscription information includes the two or more parameters, where each parameter represents a network capability for providing a corresponding service corresponding to a service requested by the terminal device, and the two or more parameters represent the network capability for providing the services for the two or more services requested by the terminal device. The parameters included in the subscription information are classified based on the network function granularity. Specifically, the parameters in the subscription information may be classified, based on a service feature of a service, into a capability parameter for supporting a proximity service, a capability parameter for supporting a location service, and capability parameters for supporting other service features. Alternatively, the parameters in the subscription information may be classified, based on an access end point of a service, into a capability parameter for supporting storage of a data network name in unified data management, a capability parameter for supporting network slice selection assistance information, and capability parameters for supporting other services. A classification manner of the parameters in the subscription information is not specifically limited in this embodiment of this application. In this embodiment of this application, based on the network function granularity-based subscription information, the subscription information does not need to be transmitted between different function network elements. This simplifies the information transmission procedure between the networks, saves the large quantity of resources, reduces the security attack during information transmission, and improves the information security.

In a possible implementation, the method further includes:
establishing a connection relationship with the target network function based on the information about the target network function, where there is a mapping relationship between the information about the target network function and the identifier information of the terminal device.

In this embodiment of this application, a possible implementation of establishing the connection relationship with the target network function is provided. Specifically, after the information that is about the target network function and that is sent by the first network device is obtained, the connection relationship is established with the target network function based on the information about the target network function, so that the target network function can provide, for the terminal device, a dedicated service required by the terminal device. Because the target network function is a node that provides the dedicated service for the terminal device, there is the mapping relationship between the information about the target network function and the identifier information of the terminal device. The target network function in this embodiment of this application may be specifically the user service node. According to this embodiment of this application, the connection relationship may be established with the target network function, to obtain, from the target network function, the plurality of services required by the terminal device.

In a possible implementation, the first message further includes a network function creation message, and the network function creation message indicates to create, when the target network function does not exist, a network function that has the network capability indicated by the subscription information as the target network function.

In this embodiment of this application, the first message further includes the network function creation message. Specifically, the first network device searches, based on the obtained subscription information, existing network functions in the network for a network function corresponding to the subscription information, and determines the network function as the target network function, to provide a corresponding dedicated service for the terminal device. When the terminal device currently does not have the corresponding network function to provide the service for the terminal device, or there is no network function corresponding to the subscription information in the existing network functions, the network function creation message in the first message indicates to create a network function that has the network capability indicated by the subscription information as the target network function. The target network function in this embodiment of this application may be specifically the user service node. According to this embodiment of this application, the target network function can be effectively determined, to provide the service of the required service for the terminal device.

According to a fourth aspect, an embodiment of this application provides a subscription management apparatus. The apparatus includes:
an obtaining unit, configured to obtain a first message, where the first message includes identifier information corresponding to a terminal device; and
a sending unit, configured to send a second message to a second network device, where the second message is for requesting subscription information corresponding to the identifier information, the subscription information is for determining a target network function, and the target network function has a network capability indicated by the subscription information.

In a possible implementation, the subscription information includes two or more parameters, and the two or more parameters represent a network capability for providing services for two or more services.

In a possible implementation, the apparatus further includes:
the obtaining unit, further configured to obtain the subscription information; and
a connection unit, configured to establish a connection relationship with the target network function based on the subscription information.

In a possible implementation, the first message further includes a network function creation message, and the network function creation message indicates to create, when the target network function does not exist, a network function that has the network capability indicated by the subscription information as the target network function.

In a possible implementation, the sending unit is further configured to send an authentication request to the second network device, where the authentication request is for requesting to perform authentication on the identifier information, or is for requesting to perform authentication and authorization on an operation of obtaining the subscription information.

In a possible implementation, the second message includes authentication information of the second network device, and the authentication information represents that the authentication on the identifier information is completed, or the authentication and the authorization on the operation of obtaining the subscription information are completed.

In a possible implementation, the sending unit is further configured to send information about the target network function to the terminal device, where the information about the target network function is for the terminal device to establish the connection relationship with the target network function, and there is a mapping relationship between the information about the target network function and the identifier information of the terminal device.

In a possible implementation, the first message further includes type information of the network function, and the type information of the network function indicates the network function requested by the terminal device.

In a possible implementation, the second message is further for requesting policy information corresponding to the identifier information, and the policy information is for determining the target network function.

For technical effects brought by any one of the fourth aspect and the possible implementations of the fourth aspect, refer to the descriptions of the technical effects corresponding to the first aspect and the corresponding implementations of the first aspect.

According to a fifth aspect, an embodiment of this application provides a subscription management apparatus. The apparatus includes:
an obtaining unit, configured to obtain a second message sent by a first network device, where the second message is for requesting subscription information corresponding to identifier information of a terminal device, the subscription information is for determining a target network function, and the target network function has a network capability indicated by the subscription information; and
a sending unit, configured to send the subscription information to the first network device based on the second message.

In a possible implementation, the subscription information includes two or more parameters, and the two or more parameters represent a network capability for providing services for two or more services.

In a possible implementation, the obtaining unit is further configured to obtain an authentication request sent by the first network device, where the authentication request is for requesting to perform authentication on the identifier information, or is for requesting to perform authentication and authorization on an operation of obtaining the subscription information by the first network device.

The sending unit is further configured to send authentication information to the first network device in response to the authentication request, where the authentication information represents that the authentication on the identifier information is completed, or the authentication and the authorization on the operation of obtaining the subscription information by the first network device are completed.

In a possible implementation, the sending unit is specifically configured to: when the second message includes the authentication information of the subscription management apparatus, send the subscription information to the first network device, where the authentication information represents that the authentication on the identifier information is completed, or the authentication and the authorization on the operation of obtaining the subscription information are completed.

For technical effects brought by any one of the fifth aspect and the possible implementations of the fifth aspect, refer to the descriptions of the technical effects corresponding to the second aspect and the corresponding implementations of the second aspect.

According to a sixth aspect, an embodiment of this application provides a subscription management apparatus. The apparatus includes:
a sending unit, configured to send a first message to a first network device, where the first message includes identifier information corresponding to the subscription management apparatus, subscription information corresponding to the identifier information is for determining a target network function, and the target network function has a network capability indicated by the subscription information; and
an obtaining unit, configured to obtain information that is about the target network function and that is sent by the first network device.

In a possible implementation, the subscription information includes two or more parameters, and the two or more parameters represent a network capability for providing services for two or more services.

In a possible implementation, the apparatus further includes:
a connection unit, configured to establish a connection relationship with the target network function based on the information about the target network function, where there is a mapping relationship between the information about the target network function and the identifier information of the subscription management apparatus.

In a possible implementation, the first message further includes a network function creation message, and the network function creation message indicates to create, when the target network function does not exist, a network function that has the network capability indicated by the subscription information as the target network function.

For technical effects brought by any one of the sixth aspect and the possible implementations of the sixth aspect, refer to the descriptions of the technical effects corresponding to the third aspect and the corresponding implementations of the third aspect.

According to a seventh aspect, an embodiment of this application provides a communication apparatus, including a processor. The processor is coupled to a memory, and may be configured to execute instructions in the memory, to implement the method according to any one of the first aspect to the third aspect and the possible implementations of the first aspect to the third aspect. Optionally, the communication apparatus further includes the memory. Optionally, the communication apparatus further includes a communication interface, and the processor is coupled to the communication interface.

According to an eighth aspect, an embodiment of this application provides a processor, including an input circuit, an output circuit, and a processing circuit. The processing circuit is configured to receive a signal through the input circuit and transmit a signal through the output circuit, so that the processor performs the method according to any one of the first aspect to the third aspect and the possible implementations of the first aspect to the third aspect.

During a specific implementation process, the processor may be one or more chips, the input circuit may be an input pin, the output circuit may be an output pin, and the processing circuit may be a transistor, a gate circuit, a trigger, any logic circuit, or the like. The input signal received by the input circuit may be received and input by, for example, but not limited to, a receiver, the signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a ninth aspect, an embodiment of this application provides a communication apparatus, including a processor and a memory. The processor is configured to read instructions stored in the memory, receive a signal through a receiver, and transmit a signal through a transmitter, to perform the method according to any one of the first aspect to the third aspect and the possible implementations of the first aspect to the third aspect.

Optionally, there are one or more processors, and there are one or more memories.

Optionally, the memory may be integrated with the processor, or the memory and the processor are separately disposed.

Specifically, data output by the processor may be output to the transmitter, and input data received by the processor may be from the receiver. The transmitter and the receiver may be collectively referred to as a transceiver.

It may be understood that the communication apparatus in the ninth aspect may be one or more chips. The processor in the communication apparatus may be implemented by using hardware, or may be implemented by using software. When the processor is implemented by using the hardware, the processor may be a logic circuit, an integrated circuit, or the like; and when the processor is implemented by using the software, the processor may be a general-purpose processor, and is implemented by reading software code stored in the memory. The memory may be integrated into the processor, or may be located outside the processor and exist independently.

According to a tenth aspect, an embodiment of this application provides a computer-readable storage medium. The computer-readable storage medium is configured to store a computer program (which may also be referred to as code or instructions). When the computer program is run on a computer, the method according to any one of the first aspect to the third aspect and the possible implementations of the first aspect to the third aspect is implemented.

According to an eleventh aspect, an embodiment of this application provides a computer program product. The computer program product includes a computer program (which may also be referred to as code or instructions). When the computer program is run, a computer is enabled to perform the method according to any one of the first aspect to the third aspect and the possible implementations of the first aspect to the third aspect.

According to a twelfth aspect, an embodiment of this application provides a chip. The chip includes a processor, the processor is configured to execute instructions, and when the processor executes the instructions, the chip is enabled to perform the method according to any one of the first aspect to the third aspect and the possible implementations of the first aspect to the third aspect. Optionally, the chip further includes a communication interface, and the communication interface is configured to receive a signal or send a signal.

According to a thirteenth aspect, an embodiment of this application provides a communication system, including a terminal device, a first network device, and a second network device.

According to a fourteenth aspect, a chip system is provided. The chip system includes a processor and an interface circuit. The processor is configured to invoke, from a memory, and run a computer program (which may also be referred to as code or instructions) stored in the memory, to implement a function in any one of the first aspect to the third aspect and the possible implementations of the first aspect to the third aspect. In a possible design, the chip system further includes the memory, and the memory is configured to store necessary program instructions and necessary data. The chip system may include a chip, or may include a chip and another discrete component.

In addition, in a process of performing the method according to any one of the first aspect to the third aspect and the possible implementations of the first aspect to the third aspect, a process of sending information and/or receiving information and the like in the foregoing method may be understood as a process of outputting information by the processor, and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending the information in the foregoing method may be understood as outputting the information by the processor. For another example, receiving the information may be understood as receiving the input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in the process of performing the method according to any one of the first aspect to the third aspect and the possible implementations of the first aspect to the third aspect, the processor may be a processor specially configured to perform these methods, or may be a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in this embodiment of this application.

In a possible implementation, the at least one memory is located outside an apparatus.

In another possible implementation, the at least one memory is located inside an apparatus.

In another possible implementation, some memories in the at least one memory are located in an apparatus, and the other memories are located outside the apparatus.

In this application, the processor and the memory may alternatively be integrated into one component. In other words, the processor and the memory may alternatively be integrated together.

In this embodiment of this application, the first network device requests, based on the identifier information of the terminal device, the second network device to obtain the subscription information corresponding to the identifier information. The network function granularity of the subscription information may be used for determining the target network function, and the determined target network function has the network capability corresponding to the network function granularity of the subscription information, so that the target network function can provide, for the terminal device, the services for the plurality of services required by the terminal device. In this embodiment of this application, the subscription information does not need to be transmitted between different function network elements. This simplifies the information transmission procedure between the networks, saves the large quantity of resources, reduces the security attack during information transmission, and improves the information security.

### BRIEF DESCRIPTION OF DRAWINGS

To describe the technical solutions in embodiments of this application more clearly, the following briefly describes the accompanying drawings used in describing embodiments of this application. It is clear that the accompanying drawings in the following description show merely some embodiments of this application, and a person of ordinary skill in the art may still derive other drawings from these accompanying drawings without creative efforts.
FIG. 1 is a diagram of a 5G system architecture according to an embodiment of this appli cati on;
FIG. 2 is a diagram of a user centric network system architecture according to an embodiment of this application;
FIG. 3 is a diagram of another 5G system architecture according to an embodiment of this application;
FIG. 4 is a diagram of another user centric network system architecture according to an embodiment of this application;
FIG. 5 is a schematic flowchart of a subscription management method according to an embodiment of this application;
FIG. 6 is a schematic flowchart of another subscription management method according to an embodiment of this application;
FIG. 7 is a schematic flowchart of another subscription management method according to an embodiment of this application;
FIG. 8 is a diagram of a structure of a subscription management apparatus according to an embodiment of this application;
FIG. 9 is a diagram of a structure of a communication apparatus according to an embodiment of this application; and
FIG. 10 is a diagram of a structure of a chip according to an embodiment of this application.

### DESCRIPTION OF EMBODIMENTS

To make objectives, technical solutions, and advantages of this application clearer, the following describes embodiments of this application with reference to the accompanying drawings in embodiments of this application.

As described in the background, currently, it is necessary to study how to resolve a problem that subscription information of a terminal device consumes a large quantity of resources in a transmission process and information security is low. This application provides a subscription management method and a related apparatus, and relates to the field of communication technologies, so that the subscription information of the terminal device can be forwarded without using a network element. This simplifies an information transmission procedure between networks, saves the large quantity of resources, and improves the information security.

To describe the solutions of this application more clearly, the following first describes some knowledge related to subscription management.

The technical solutions provided in embodiments of this application may be applied to various communication systems, for example, a satellite communication system and a system in which satellite communication and a cellular network are converged. A cellular network system may include but is not limited to: a 5th generation (5th generation, 5G) system, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, an advanced long term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunications system (Universal Mobile Telecommunications System, UMTS), a worldwide interoperability for microwave access (Worldwide Interoperability for Microwave Access, WiMAX) communication system, a wireless local area network (Wireless Local Area Network, WLAN), wireless fidelity (Wireless Fidelity, Wi-Fi), a next generation communication system, another communication system, or the like. Generally, a conventional communication system supports a limited quantity of connections and is easy to implement. However, with development of the communication technologies, a mobile communication system not only supports conventional communication, but also supports other new systems such as device to device (Device to Device, D2D) communication, machine to machine (Machine to Machine, M2M) communication, machine type communication (Machine Type Communication, MTC), vehicle to vehicle (Vehicle to Vehicle, V2V) communication, and another future evolved communication system. Embodiments of this application may also be applied to these communication systems. The satellite communication system may include various non-terrestrial network systems, for example, a network that performs radio frequency transmission, such as a satellite or an unmanned aircraft system (unmanned aircraft system, UAS) platform, which is not listed one by one herein.

The following describes embodiments of this application with reference to the accompanying drawings in embodiments of this application.

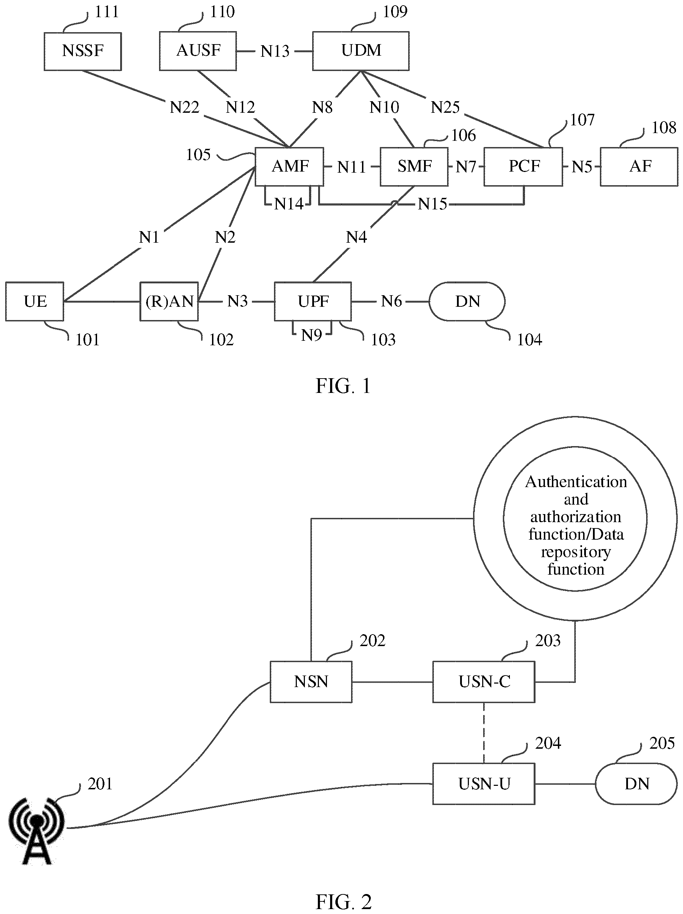

For example, for a communication system 100 applied to an embodiment of this application, refer to FIG. 1. FIG. 1 is a diagram of a 5G communication system architecture according to an embodiment of this application.

As shown in FIG. 1, the system 100 may include two parts: an access network and a core network. The access network is for implementing a function related to radio access, and mainly includes an access network (access network, AN) device 102. The access network device includes a radio access network (radio access network, RAN) device and another device (for example, Wi-Fi) that performs access through an air interface. The core network mainly includes the following several key logical network elements: a user plane function (user plane function, UPF) 103, an access and mobility management function (access and mobility management function, AMF) 105, a session management function (session management function, SMF) 106, a policy control function (policy control function, PCF) 107, and a unified data management (unified data management, UDM) function 109. The system 100 may further include one or more of a user equipment (user equipment, UE) 101, a data network (data network, DN) 104, an application function (application function, AF) 108, an authentication service function (authentication server function, AUSF) 110, and a network slice selection function (network slice selection function, NSSF) 111. Interfaces between the network elements are shown in FIG. 1. It should be understood that the network elements may alternatively communicate with each other through a service-oriented interface.

The UE may also be referred to as a terminal device. The terminal device may communicate with one or more core networks (core networks, CNs) by using the AN device. In this embodiment of this application, the terminal device includes but is not limited to a wired line connection, for example, a public switched telephone network (Public Switched Telephone Network, PSTN), a digital subscriber line (Digital Subscriber Line, DSL), a digital cable, or a direct cable connection; and/or another data connection network; and/or a wireless interface, for example, a cellular network, a wireless local area network (Wireless Local Area Network, WLAN), a digital television network such as a handheld digital television broadcast (Digital Video Broadcast-Handheld, DVB-H) network, a satellite network, or an amplitude modulation-frequency modulation (Amplitude Modulation-Frequency Modulation, AM-FM) broadcast transmitter; and/or an apparatus that is of another terminal device and that is set to receive/send a communication signal; and/or an Internet of Things (Internet of Things, IoT) device. A terminal device that is set to communicate through a wireless interface may be referred to as a "wireless communication terminal", a "wireless terminal", or a "mobile terminal". Examples of the terminal device include, but are not limited to, a satellite phone or a cellular phone; a personal communications system (Personal Communications System, PCS) terminal that may combine a cellular radio phone with data processing, facsimile, and data communication capabilities; a personal digital assistant (personal digital assistant, PDA) that may include a radio phone, a pager, Internet/intranet access, a Web browser, a notebook, a calendar, and/or a global positioning system (Global Positioning System, GPS) receiver; and a conventional laptop and/or palmtop receiver or another electronic apparatus that includes a radio telephone transceiver. The terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may also be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in the Internet of Things or Internet of Vehicles, a terminal device in a 5G network, or a terminal device in a future evolved public land mobile communication network (public land mobile network, PLMN), a terminal device of any form in a future network, or the like.

The AN device is a device that connects the terminal device to a wireless network, and may be specifically a base station. There may be various forms of base stations, for example, a macro base station, a micro base station (also referred to as a small cell), a relay station, and an access point. The base station may be specifically an access point (access point, AP) in a wireless local area network (wireless local area network, WLAN), a base station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (Evolved NodeB, eNB or eNodeB) in LTE, a relay station, an access point, a vehicle-mounted device, a wearable device, a next generation NodeB (next generation NodeB, gNB) in a 5G system, a base station in a future evolved public land mobile network (public land mobile network, PLMN), or the like. This is not specifically limited in this embodiment of this application. Devices through which a terminal accesses the core network are collectively referred to as access network devices in this application, and are not described again.

The UDM has functions of user subscription data management, generation of user authentication information, and the like.

A UDR is a unified data repository (unified data repository, UDR), and has functions of storage of user subscription or authorization data, storage of application-related data, and the like.

The AMF is mainly responsible for functions of UE registration management, UE connection management, UE reachability management, UE access authorization and access authentication, UE security functionality, UE mobility management, network slice (network slice) selection, and SMF selection. The AMF serves as an anchor of an N1/N2 interface signaling connection, provides the SMF with routing of an N1/N2 interface session management (session management, SM) message, and maintains and manages state information of the UE. The AMF is a mobility management network element in a 5G system.

The SMF is mainly responsible for all control plane functions in LTE session management. The control plane functions include UPF selection and control, internet interconnection protocol (internet protocol, IP) address assignment and management, quality of service (quality of service, QoS) management of a session, obtaining of a policy and charging control (policy and charging control, PCC) policy from the PCF, and the like. The SMF also serves as a termination point of an SM part in a non-access stratum (non-access stratum, NAS) message.

The PCF has functions of providing a policy rule to a control plane functional entity and the like.

The AF may be an application server, and may belong to an operator or a third party.

The UPF is mainly responsible for processing a user packet, for example, forwarding and charging. The UPF may serve as an anchor of a protocol data unit (protocol data unit, PDU) session (session) connection, namely, a PDU session anchor (PDU session anchor, PSA), and is responsible for data packet filtering, data transmission/forwarding, rate control, charging information generation, QoS handling for a user plane, uplink transmission authentication, transmission class verification, downlink data packet buffering, downlink data notification triggering, and the like of the UE. The UPF may also serve as a branching point of a multi-homed (multi-homed) PDU session.

The DN is a network that provides a user with a data transmission service, for example, an IP multimedia service (IP Multimedia service, IMS) or the Internet. The DN may include an application server (application server, AS). The AS is a software framework, provides an environment in which an application program runs, and is configured to provide the application program with services such as security, data, transaction support, load balancing, and large-scale distributed system management. The UE communicates with the AS to obtain an application packet. It should be noted that the AF is a control plane of the AS.

It should be understood that this embodiment of this application is not limited to being applied to the system architecture shown in FIG. 1. For example, a communication system to which the subscription management method in embodiments of this application may be applied may include more or fewer network elements or devices. The devices or the network elements in FIG. 1 may be hardware, or may be software obtained through function division or a combination of the hardware and the software. The devices or the network elements in FIG. 1 may communicate with each other by using another device or network element.

For example, for a communication system 200 applied to an embodiment of this application, refer to FIG. 2. FIG. 2 is a diagram of a user centric network (User Centric Network, UCN) system architecture according to an embodiment of this application.

As shown in FIG. 2, in the UCN system, there are mainly two types of network elements: a network service node (Network Service Node, NSN) 202, and user service nodes (User Service Nodes, USNs) 203 and 204. Functions of the USN may be further classified into a control plane function (USN-C) 203 and a user plane function (USN-U) 204. The control plane function (USN-C) 203 is responsible for processing control plane signaling of a UE, and controls the user plane function (USN-U) 204 by using a session management function. The user plane function (USN-U) 204 is mainly responsible for forwarding user plane data of the UE.

The UCN system 200 may further include a base station 201 and a data network (DN) 205. Interfaces between the network elements/devices are shown in FIG. 2. It should be understood that the network elements/devices may alternatively communicate with each other through a service-oriented interface. During actual deployment, the NSN is connected to the base station, and may be deployed close to the base station, or may even be deployed with the base station.

The NSN is a network control function device, or a network device integrating a network control function. Main functions of the NSN include authentication on UE access and management on resources of the USN, and may be specifically creation and life cycle management on the USN, for example, operations such as generation, change, and elimination on the USN.

The USN is a core network function that provides a dedicated service for a terminal device on a network side, and may implement a function of a CN device in a 4G mobile communication system or a 5G mobile communication system.

For example, the USN may perform a control plane signaling function (for example, one or more of functions such as session management, policy management, and UE context management). For another example, the USN may perform a user plane function (for example, data forwarding, traffic statistics, and QoS processing). For another example, the USN may be a digital twin function of the terminal device in a core network, that is, a digital model of an actual behavior of the terminal device. Specifically, the USN may record a location, a service, artificial intelligence (artificial intelligence, AI) processing, and the like of the terminal device. For another example, the USN may be a cloud server (for example, a cloud computer), and the terminal device may set, on the cloud server, resources provided by an operator (for example, set QoS of a service and allocate bandwidth).

Optionally, the USN includes a control plane function (USN control, USN-C) and a user plane function (USN user, USN-U). The USN-C may perform a control plane signaling function. For example, the USN-C may process control plane signaling of the terminal device, and control the USN-U by using the session management function. The USN-U may perform a user plane function. For example, the USN-U may forward user plane data of the terminal device.

The USN may be a physical communication device, or may be a dynamically generated communication device or virtual network resource dedicated to the terminal device. Therefore, the network architecture is referred to as a user centric network. A database in FIG. 2 stores subscription data of the UE, and the DN (Data Network, data network) may be understood as a type of network, for example, the Internet.

When the UE initially accesses the network, the NSN may access the database based on identifier information of the UE, obtain subscription corresponding to the identifier information of the UE, and create a USN dedicated to the UE based on the subscription data of the UE. Then, the NSN may perform life cycle management on the USN corresponding to the UE, for example, release resources of the USN after a use period of the USN expires.

It should be understood that this embodiment of this application is not limited to being applied to the system architecture shown in FIG. 2. For example, a communication system to which the subscription management method in embodiments of this application may be applied may include more or fewer network elements or devices. The devices or the network elements in FIG. 2 may be hardware, or may be software obtained through function division or a combination of the hardware and the software. The devices or the network elements in FIG. 2 may communicate with each other by using another device or network element.

In the 5G system architecture shown in FIG. 1 and the UCN system architecture shown in FIG. 2, the terminal device accesses a network by using an access network based on subscription information corresponding to the terminal device. The subscription information is centrally managed by the UDM, is stored in the UDR, and records information identifying that the terminal device is allowed to access the network, slice-related subscription, session-related subscription, and the like.

A 5G core network is designed based on network element logic. A plurality of function network elements included in the 5G core network need to separately interact with the UDM, to obtain subscription information of the terminal device, and provide corresponding function services for the terminal device. For example, an access and mobility management function network element obtains access-related subscription of the terminal device by interacting with the UDM, and provides function services such as registration, access, and tracking area update procedures for the terminal device. A session management function network element obtains session-related subscription of the terminal device by interacting with the UDM, and provides a session procedure function service for the terminal device.

However, the subscription information of the terminal device needs to be forwarded between different function network elements, so that each function network element provides a corresponding service for the terminal device, a large quantity of resources are consumed in a transmission process, and there is a security attack problem. Consequently, information security is low.

In the UCN system, the USN for a UE-dedicated service is defined. The USN may integrate functions of existing network elements such as an AMF, an SMF, and a PCF. Functions of the network elements in the core network may be implemented by the USN. One USN provides specific services for one UE or a group of UEs. In comparison with subscription management in the 5G core network, a signaling procedure between networks can be simplified.

However, the foregoing UCN system is still based on subscription management of the UE in the existing network architecture, and a USN is created/selected on the network side still based on different subscription of the UE. Therefore, a problem of transmission of subscription information of the UE in the network still persists. To be specific, a core network element needs to obtain different subscription of the UE from the UDM for a plurality of times, a large quantity of resources are consumed in a transmission process, and there is a security attack problem. Consequently, information security is low.

For the problems of the high transmission resource consumption and the low information security in the subscription management of the 5G core network in FIG. 1 and the subscription management of the UCN system in FIG. 2, an embodiment of this application provides a new network architecture, and proposes a corresponding subscription management method based on the new network architecture, so that the subscription information of the terminal device can be forwarded without using a network element. This simplifies an information transmission procedure between the networks, saves the large quantity of resources, and improves the information security.

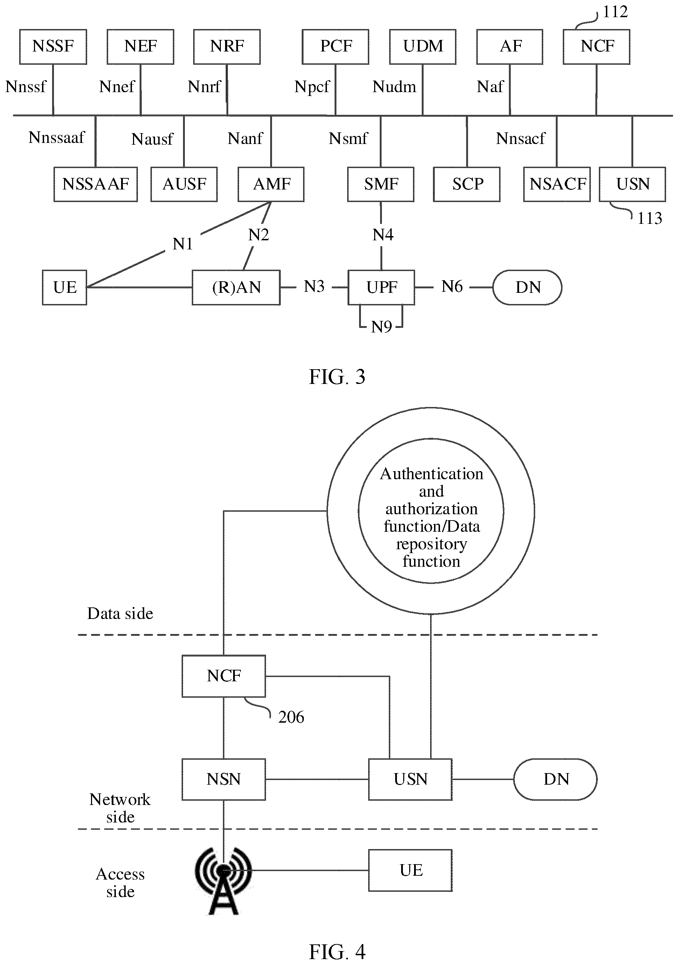

FIG. 3 is a diagram of a 5G system architecture according to an embodiment of this application.

As shown in FIG. 3, in comparison with the communication system 100 shown in FIG. 1, a communication system in this embodiment of this application further includes a network control function (Network Control Function, NCF) 112 and a user service node (User Service Node, USN) 113.

The NCF is a network control function device, or a network device integrating a network control function. Main functions of the NCF include authentication on UE access and management on resources of the USN, and may be specifically creation and life cycle management on the USN, for example, operations such as generation, change, and elimination on the USN. Optionally, the NCF may be further integrated into an NSN to implement resource management on the USN.

The USN may be understood as integration of core network control functions, and a core network element that provides a dedicated service for a terminal device. For example, the USN may integrate an SM (session management) function and/or a PM (policy management) function. Alternatively, the USN may be understood as a digital twin function of the UE in a core network, and is a digital model of a real behavior of the UE, for example, functions such as recording a location of the UE, used service information, and AI processing. Alternatively, the USN may also be similarly understood as a cloud server (cloud computer). The UE may orchestrate, on the cloud server, resources provided by an operator, for example, QoS setting and bandwidth allocation of different services.

In addition, for interfaces between network elements in the communication system shown in this embodiment of this application, refer to FIG. 1. Details are not described herein again. It should be understood that the network elements may alternatively communicate with each other through a service-oriented interface.

It should be understood that this embodiment of this application is not limited to being applied to the system architecture shown in FIG. 3. For example, a communication system to which the subscription management method in embodiments of this application may be applied may include more or fewer network elements or devices. The devices or the network elements in FIG. 3 may be hardware, or may be software obtained through function division or a combination of the hardware and the software. The devices or the network elements in FIG. 3 may communicate with each other by using another device or network element.

In this embodiment of this application, the NCF may determine, based on network function granularity-based subscription information of the UE, a USN that provides a dedicated service for the UE. To be specific, the USN may support a network capability corresponding to the network function granularity of the subscription information of the UE, and provide a plurality of specific services for one UE or a group of UEs. Therefore, the subscription information of the UE can be forwarded without using the network element. This simplifies an information transmission procedure between networks, saves a large quantity of resources, and improves information security.

FIG. 4 is a diagram of a UCN system architecture according to an embodiment of this application.

As shown in FIG. 4, in comparison with the communication system 200 shown in FIG. 2, a communication system in this embodiment of this application further includes a network control function (NCF) 206.

The NCF is a network control function device, or a network device integrating a network control function. Main functions of the NCF include authentication on UE access and management on resources of a USN, and may be specifically creation and life cycle management on the USN, for example, operations such as generation, change, and elimination on the USN. Optionally, the NCF may be further integrated into an NSN to implement resource management on the USN.

In addition, for interfaces between network elements in the communication system shown in this embodiment of this application, refer to FIG. 2. Details are not described herein again. It should be understood that the network elements may alternatively communicate with each other through a service-oriented interface.

It should be understood that this embodiment of this application is not limited to being applied to the system architecture shown in FIG. 4. For example, a communication system to which the subscription management method in embodiments of this application may be applied may include more or fewer network elements or devices. The devices or the network elements in FIG. 4 may be hardware, or may be software obtained through function division or a combination of the hardware and the software. The devices or the network elements in FIG. 4 may communicate with each other by using another device or network element.

It should be understood that the NSN, the USN, and the NCF may have other names, or may be other communication devices with a same function. This is not limited in this application. For example, the NSN may be an access control function, the NCF may be a network resource control or management function, and the USN may be a terminal digital twin function.

In this embodiment of this application, the NCF may determine, based on network function granularity-based subscription information of a UE, a USN that provides a dedicated service for the UE. To be specific, the USN may support a network capability corresponding to the network function granularity of the subscription information of the UE, and provide a plurality of specific services for one UE or a group of UEs. Therefore, the subscription information of the UE can be forwarded without using the network element. This simplifies an information transmission procedure between networks, saves a large quantity of resources, and improves information security.

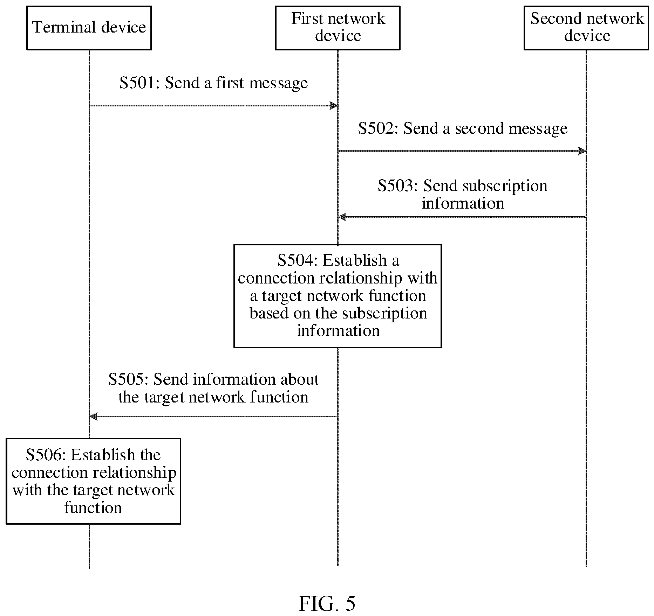

FIG. 5 is a schematic flowchart of a subscription management method according to an embodiment of this application. The subscription management method is applied to the field of communication technologies.

As shown in FIG. 5, a communication system to which the subscription management method in this embodiment of this application is applied includes but is not limited to a terminal device, a first network device, and a second network device.

As shown in FIG. 5, the subscription management method in this embodiment of this application may include steps S501, S502, S503, S504, S505, and S506. An execution sequence of steps S501, S502, S503, S504, S505, and S506 is not limited in this embodiment of this application. Specifically, the subscription management method includes but is not limited to the following steps.

Step S501: The terminal device sends a first message, and correspondingly, the first network device receives the first message sent by the terminal device.

The first message includes but is not limited to identifier information corresponding to the terminal device.

In this embodiment of this application, the first network device is a network control function device, or a network device integrating a network control function, may manage a resource of a user service node, and may specifically perform operations such as generation, change, and elimination on the user service node. The user service node may be understood as a core network element that integrates a core network control function and provides a dedicated service for the terminal device, or may be understood as a type of cloud server. The terminal device may orchestrate, on the user service node, resources provided by an operator.

Optionally, the terminal device sends the first message to the first network device via a base station. Correspondingly, the first network device is connected to the base station, and receives, from the base station, the first message sent by the terminal device.

Optionally, the first message may further include type information of a network function, and the type information of the network function indicates a network function that the terminal device expects to obtain.

Step S502: After receiving the first message, the first network device sends a second message to the second network device in response to the first message, and correspondingly, the second network device receives the second message sent by the first network device.

The second message is for requesting subscription information corresponding to the identifier information of the terminal device. A network function granularity of the subscription information may be used for determining a target network function. The determined target network function has a network capability corresponding to the network function granularity of the subscription information, so that the target network function can provide, for the terminal device, services for a plurality of services required by the terminal device. The target network function in this embodiment of this application may be specifically the user service node.

Specifically, the subscription information includes two or more parameters, where each parameter represents a network capability for providing a corresponding service corresponding to a service requested by the terminal device, and the two or more parameters represent a network capability for providing services for the two or more services requested by the terminal device. The parameters included in the subscription information are classified based on the network function granularity, and may be specifically shown in the following table:

| Network function granularity of subscription information | Network capability supported by a parameter in the subscription information |
|---|---|
| Service feature | Capabilities such as V2X, ProSe, LCS, URLLC, and mIOT |
| Access end point | DNN, S-NSSAI, and the like |
| Transmission resource | USN-AMBR, USN-MGBR, and like |
| ... | ... |

It can be learned from the foregoing table that, the parameters in the subscription information may be classified, based on a service feature of a service, into a capability parameter for supporting a proximity service (Proximity Service, ProSe), a capability parameter for supporting a location service (Location Service, LCS), and capability parameters supporting other service features. Alternatively, the parameters in the subscription information may be classified, based on an access end point of a service, into a capability parameter for supporting storage of a data network name (data network number, DNN) in unified data management, a capability parameter for supporting network slice selection assistance information (network slice selection assistance information, NSSAI) and capability parameters for supporting other services. Alternatively, the parameters in the subscription information may be classified, based on a transmission resource of a service, into a capability parameter for supporting a user service node-aggregate maximum bit rate (Aggregate Maximum Bit Rate, AMBR), a capability parameter for supporting a user service node-maximum guaranteed bit rate (Maximum Guaranteed Bit Rate, MGBR), and capability parameters for supporting other services. Different operators may combine the foregoing features into different subscription information. A classification manner of the parameters in the subscription information is not specifically limited in this embodiment of this application.

In this embodiment of this application, the second network device is a unified data management device, and may be specifically a data plane network element in a core network, and is configured to manage data such as the subscription information and the identifier information of the terminal device. Correspondingly, the second network device stores subscription or authorization data of the terminal device, and stores application-related data.

In this embodiment of this application, based on the network function granularity-based subscription information, the subscription information does not need to be transmitted between different function network elements. This simplifies an information transmission procedure between networks, saves a large quantity of resources, reduces a security attack during information transmission, and improves information security.

Optionally, the second message may be further used for requesting policy information, and the policy information is for determining a target network function that has a network capability for providing a service required by the terminal device. When the target network function determined by using the subscription information conflicts with the target network function determined by using the policy information, the target network function determined by using the policy information is used.

Optionally, before sending the second message to the second network device, the first network device may further send an authentication request to the second network device, to request the second network device to perform authentication on the identifier information, or request to perform authentication and authorization on a subsequent operation of obtaining the subscription information. This ensures that the operation of obtaining the subscription information is secure and reliable, and improves security and reliability of subscription management.

Correspondingly, the second network device obtains the authentication request sent by the first network device, and sends authentication information to the first network device in response to the authentication request. The authentication information represents that the authentication on the identifier information is completed, or the authentication and the authorization on the operation of obtaining the subscription information by the first network device are completed. This ensures that the operation of obtaining the subscription information is secure and reliable, and improves the security and the reliability of the subscription management.

Optionally, the second message may further include the authentication information of the second network device, and the authentication information represents that the authentication on the identifier information of the terminal device is completed, or the authentication and the authorization on the operation of obtaining the subscription information are completed. Specifically, after sending the authentication request to the second network device, the second network device allows the authentication request, and returns the authentication information to the first network device, representing that the authentication on the identifier information is completed, or the authentication and the authorization on the operation of obtaining the subscription information are completed. In this case, the second message sent by the first network device to the second network device includes the authentication information, representing that the first network device has been authorized to perform the operation of obtaining the subscription information, and can successfully obtain the subscription information. This ensures that the operation of obtaining the subscription information is secure and reliable, and improves the security and the reliability of the subscription management.

Step S503: After receiving the second message sent by the first network device, the second network device sends the subscription information to the first network device in response to the second message, and correspondingly, the first network device receives the subscription information sent by the second network device.

Optionally, the second message may further include the authentication information of the second network device. In this case, when the second message includes the authentication information of the second network device, the second network device sends the subscription information to the first network device. The second network device returns the authentication information to the first network device only after completing the authentication on the identifier information or completing the authentication and the authorization on the operation of obtaining the subscription information. The second message includes the authentication information, representing that the first network device has been authorized to perform the operation of obtaining the subscription information. Therefore, the subscription information may be sent to the first network device. This ensures that the operation of obtaining the subscription information is secure and reliable, and improves the security and the reliability of the subscription management.

Step S504: The first network device establishes a connection relationship with the target network function based on the received subscription information.

After obtaining the subscription information from the second network device, the first network device establishes the connection relationship with the target network function based on the subscription information.

The two or more parameters in the subscription information represent the network capability for providing the services for the two or more services required by the terminal device. Correspondingly, the target network function that has the network capability for providing the services for the two or more services may be determined based on the subscription information, to establish the connection relationship with the target network function. The target network function in this embodiment of this application may be specifically the user service node.

According to this embodiment of this application, the connection relationship may be established with the target network function, to manage a resource of the target network function.

Optionally, the first message may further include a network function creation message, and the network function creation message indicates to create, when the target network function does not exist, a network function that has the network capability indicated by the subscription information as the target network function, to provide the services for the two or more services requested by the terminal device.

Specifically, the first network device searches, based on the obtained subscription information, existing network functions in a network for a network function corresponding to the subscription information, and determines the network function as the target network function, to provide a corresponding dedicated service for the terminal device. When the terminal device currently does not have the corresponding network function to provide the service for the terminal device, or there is no network function corresponding to the subscription information in the existing network functions, the network function creation message in the first message indicates to create a network function that has the network capability indicated by the subscription information as the target network function, to provide the services for the two or more services requested by the terminal device.

According to this embodiment of this application, the target network function can be effectively determined, to provide the service of the required service for the terminal device.

Step S505: The first network device sends information about the target network function to the terminal device, and correspondingly, the terminal device receives the information that is about the target network function and that is sent by the first network device.

The information about the target network function indicates the terminal device to establish the connection relationship with the target network function, and there is a mapping relationship between the information about the target network function and the identifier information of the terminal device. Specifically, after the target network function is determined, the information about the target network function is sent to the terminal device. The information about the target network function indicates the terminal device to establish the connection relationship with the target network function, so that the target network function can provide, for the terminal device, the dedicated service required by the terminal device. Because the target network function is a network function that provides the dedicated service for the terminal device, there is the mapping relationship between the information about the target network function and the identifier information of the terminal device.

Step S506: The terminal device establishes the connection relationship with the target network function based on the received information about the target network function.

In this step, the terminal device may establish the connection relationship with the target network function, to obtain, from the target network function, the plurality of services required by the terminal device.

A current core network is designed based on network element logic. Different function network elements serving the terminal device (user) need to separately obtain the subscription information of the terminal device from the data plane network element, to provide a corresponding service for the terminal device. However, in a process in which the subscription information of the terminal device is transmitted between the foregoing different function network elements, a large quantity of resources are consumed, and there is a security attack problem. Consequently, information security is low.

However, in this embodiment of this application, the first network device requests, based on the identifier information of the terminal device, the second network device to obtain the subscription information corresponding to the identifier information. The network function granularity of the subscription information may be used for determining the target network function, and the determined target network function has the network capability corresponding to the network function granularity of the subscription information, so that the target network function can provide, for the terminal device, the services for the plurality of services required by the terminal device. In comparison with a conventional technology, in this embodiment of this application, the subscription information does not need to be transmitted between different function network elements. This simplifies the information transmission procedure between the networks, saves the large quantity of resources, reduces the security attack during information transmission, and improves the information security.

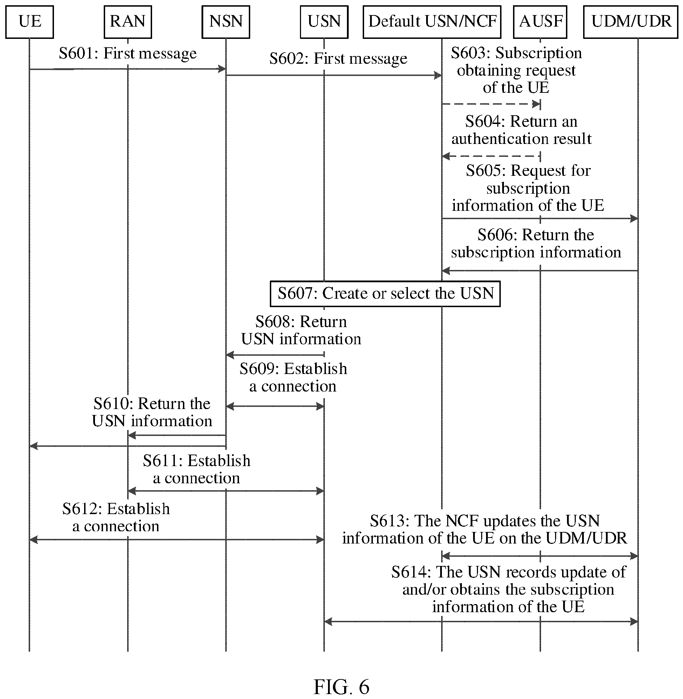

FIG. 6 is a schematic flowchart of another subscription management method according to an embodiment of this application, and may also be understood as a variation or a supplement to the flowchart of the subscription management method in FIG. 5.

As shown in FIG. 6, a communication system to which the subscription management method in this embodiment of this application is applied includes but is not limited to a UE, a RAN, an NSN, a USN, a default USN (Default USN) or NCF, an AUSF, a UDM, or a UDR. The terminal device in FIG. 5 is equivalent to the UE in this embodiment of this application. The first network device in FIG. 5 is equivalent to the default USN or the NCF in this embodiment of this application, and may also be understood as equivalent to function integration of the NCF and the NSN in this embodiment of this application, to manage a resource of a user service node. The second network device in FIG. 5 is equivalent to the UDM or the UDR in this embodiment of this application and may also be understood as equivalent to function integration of the UDM and the AUSF in this embodiment of this application, and is configured to manage data such as subscription information and identifier information of a terminal device. Optionally, the network function or the target network function in FIG. 5 may be specifically the user service node in this embodiment of this application.

As shown in FIG. 6, the subscription management method in this embodiment of this application may include steps S601 to S614. An execution sequence of steps S601 to S614 is not limited in this embodiment of this application. Specifically, the subscription management method includes but is not limited to the following steps.

Step S601: The UE sends a first message to the NSN via the RAN.

The UE sends the first message to an access network element (an AMF or the NSN) or a user plane function network element (a UPF) via the RAN (for example, a base station).

The first message includes identifier information of the UE, and is for identity authentication. The first message may specifically be a non-access stratum message (NAS message), a registration request message, a service request message, a session setup message, a USN creation request message, or the like, and indicates a USN service that the UE expects to obtain.

Correspondingly, the access network element is connected to the base station, and receives, from the base station, the first message sent by the UE.

In an optional implementation, the UE may include, in the first message, USN information that needs to be requested to be created, for example, a USN identifier, a USN type, or capability information that the USN needs to have.

Step S602: The NSN forwards the first message to the default USN or the NCF.

The access network element (the AMF or the NSN) sends the first message of the UE to the default USN or the NCF, where the first message includes a registration/service request.

Specifically, the access network element may directly forward the first message sent by the UE to the default USN or the NCF, or forward a part of content in the first message to the default USN or the NCF. For example, request content in the first message may be included in a container, and the access network element may forward the container to the default USN or the NCF, or reconstruct a message based on the first message and send the message to the default USN or the NCF.

For example, when the first message is the service request message or the session setup message, the access network element finds that the current UE does not have a corresponding USN that provides a service for the UE, so that the access network element may construct a USN creation or request message for the default USN or the NCF, where the USN creation or request message includes the identifier information of the UE, and the identifier information of the UE may be obtained from the first message.

Step S603: The default USN or the NCF sends a subscription obtaining request of the UE to the AUSF.

Specifically, the default USN or the NCF performs authentication on the identifier information of the UE, or performs authentication and authorization on an operation of obtaining subscription information of the UE by the default USN or the NCF.

For example, the default USN or the NCF sends the identifier information of the UE to the AUSF for UE identifier authentication, or the default USN or the NCF performs, by using the AUSF or another network function, authentication and authorization, and recording on the operation that the NCF needs to obtain the subscription information of the UE from a user subscription database (for example, the UDM or the UDR), to ensure that the operation of the default USN or the NCF is secure and reliable. It should be understood that this step is an optional execution step.

Step S604: The AUSF returns an authentication result to the default USN or the NCF.

Specifically, in response to the subscription obtaining request of the UE sent by the default USN or the NCF, the AUSF or another function network element feeds back, to the default USN or the NCF, the authentication result that passes the authentication. The authentication result indicates whether the default USN or the NCF is allowed to obtain the subscription information corresponding to a UE identifier.

In addition, if the authentication is passed, the feedback result may further carry information (for example, identifier information or address information of the UDM or the UDR) about a network element subscribed to by the UE corresponding to the UE identifier. The carried network element information may be a key or a token, and represents that the operation of obtaining the subscription information of the UE by the default USN or the NCF is authorized.

Step S605: The default USN or the NCF sends a request for the subscription information of the UE to the UDM/UDR.

Specifically, the default USN or the NCF sends a request message of the subscription information of the UE to the network element subscribed to by the UE corresponding to the UE identifier. In addition, if the NCF obtains the key or the token in step S604, the NCF may carry the key or the token in the request message in this step. The requested subscription information of the UE includes a USN type that can be used by the UE and a network capability supported by the USN. Alternatively, if the UE includes the requested USN information in the first message, the default USN or the NCF may perform verification on the UDM/UDR to determine whether a USN corresponding to the subscription information of the UE has a capability of supporting a plurality of pieces of service information requested by the UE or whether the subscription information of the UE matches a USN requested by the UE.

Parameters included in the subscription information of the UE are classified based on a network function granularity. An example is as follows.

The parameters may be classified, based on a service feature of a service, into capability parameters for supporting V2X, ProSe, LCS, URLLC, mIOT, and the like. Alternatively, the parameters may be classified, based on an access end point of a service, into capability parameters for supporting a DNN, S-NSSAI, and the like. Alternatively, the parameters may be classified, based on a transmission resource of a service, into capability parameters for supporting a USN-AMBR, a USN-MGBR, and the like.

It should be understood that different operators may combine the foregoing features into different subscription information, to correspondingly indicate different USN types. For example, USNs are classified into a USN for the V2X, a USN for eMBB, and the like based on the service feature, and the USN types are distinguished based on different DNNs and/or slice information combinations and different resource use permissions. Different USN types may be represented by using different USN identifier information. Specifically, a representation form of the USN identifier information may be shown in the following table:

| USN identifier | Supported capability parameter | Supported access end point information | Transmission resource (QoS-related) information |
|---|---|---|---|
| USN-1 | V2X, LCS, eMBB | S-NSSAI 1 + DNN 1, S-NSSAI 1 + DNN 2, DNN 3 | USN-AMBR = 100 Mbps, USN-MGBR = 30 Mbps, PC5-AMBR = 50 Mbps |
| USN-2 | eMBB, ProSe | S-NSSAI 2 + DNN 1, S-NSSAI 3 | USN-AMBR = 100 Mbps, PC5-AMBR = 40 Mbps |
| USN-3 | mIOT | DNN 4 | USN-AMBR = 10 Mbps |

It can be learned from the foregoing table that the USN identifier information may be a USN identifier, for example, the USN-1, the USN-2, or the USN-3 in the foregoing table. Alternatively, the USN identifier information may be a character string. For example, capability information supported by different USNs is represented in the USN identifier information by using corresponding characters, for example, {V2X, LCS, eMBB}, {eMBB, ProSe}, or {mIOT} in the foregoing table. For another example, access end point information supported by different USNs is represented in the USN identifier information by using corresponding characters, for example, f S-NSSAI 1 + DNN 1, S-NSSAI 1 + DNN 2, DNN 3}, {S-NSSAI 2 + DNN 1, S-NSSAI 3}, or {DNN 4} in the foregoing table. For another example, transmission resource information supported by different USNs is represented in the USN identifier information by using corresponding characters, for example, {USN-AMBR = 100 Mbps, USN-MGBR = 30 Mbps, PC5-AMBR = 50 Mbps}, {USN-AMBR = 100 Mbps, PC5-AMBR = 40 Mbps}, or {USN-AMBR = 10 Mbps} in the foregoing table.

The character string "PC5-AMBR = 50 Mbps" represents that a maximum rate of the PC5 for V2X communication is 50 Mbps, the character string "PC5-AMBR = 40 Mbps" represents that a maximum rate of the PC5 for ProSe communication is 40 Mbps, and a PC5 interface is an interface for direct communication between UEs.

Step S606: The UDM/UDR returns the subscription information to the default USN or the NCF.

Specifically, the default USN or the NCF obtains the subscription information of the UE corresponding to the UE identifier. The subscription information of the UE includes a plurality of parameters indicating the USN type that can be used by the UE and/or the network capability that is supported by the USN.

It should be understood that a representation manner of the USN type is not limited herein. The USN type may be an index, for example, the USN identifier information, or a group of string parameters, for example, a combination of specific values of different function parameters such as {V2X, LCS, eMBB}. For details, refer to the descriptions in step S605. Details are not described herein again.

Step S607: The default USN or the NCF creates or selects the USN.

Specifically, the default USN or the NCF creates or selects, for the UE, a USN as a target node based on the subscription information of the UE. The target node can provide, for the UE, a plurality of services requested by the UE. In other words, the generated or selected USN has a capability corresponding to the subscription information. If there are available USNs used for providing the services for the UE, the default USN or the NCF may select, for the UE, an appropriate USN from the available USNs as the target node. If no available USN provides the services for the UE, the default USN or the NCF creates, for the UE, a USN as the target node.

For example, the USN has the network capability indicated by the UE subscription information, or the USN provides the dedicated services for a specific group of UEs, and the UE belongs to the specific group of UEs (where the default USN or the NCF may determine whether to select a USN for the UE based on UE group information in the UE subscription, or corresponding group information carried in the request message by the UE). In this case, the USN is selected for the UE to provide a corresponding service.

Step S608: The USN returns the USN information to the NSN.

Specifically, the NCF sends the generated or selected USN information to the access network element (the AMF or the NSN) or the user plane function network element (the UPF).

Correspondingly, after receiving the USN information, the access network element (the AMF or the NSN) or the user plane function network element (the UPF) maintains a mapping relationship between the identifier information of the UE or address information of the UE and the USN information (where the USN information may be the USN identifier information and/or USN address information). After receiving a message of the UE subsequently, the access network element (the AMF or the NSN) or the user plane function network element (the UPF) may forward, based on the identifier information of the UE or the address information of the UE and the mapping relationship, the message of the UE to the USN corresponding to the identifier information of the UE or the address information of the UE, to improve information transmission efficiency.

Step S609: The NSN establishes a connection to the USN.

Specifically, the access network element (the AMF or the NSN) or the user plane function network element (the UPF) establishes a connection relationship with the USN based on the USN information obtained in step S608.

Step S610: The NSN returns the USN information to the RAN and/or the UE.

Specifically, the access network element (the AMF or the NSN) or the user plane function network element (the UPF) sends the USN information to the base station, and/or sends, to the USN, information about the base station connected to the UE, so that the base station establishes a connection to the USN. Alternatively, the access network element (the AMF or the NSN) or the user plane function network element (the UPF) sends the USN information to the UE, and/or sends UE information to the USN, so that the UE establishes a connection to the USN.

Optionally, the USN may obtain the RAN and/or UE information from the NSN after establishing the connection to the NSN, or the NSN includes the RAN and/or UE information in step S602, and then the NCF sends the RAN and/or UE information to the USN in step S607, so that the RAN and/or UE is connected to the USN.

Step S611: The RAN establishes a connection to the USN.

The base station establishes a connection relationship with the USN based on the received USN information, or the USN establishes a connection relationship with the base station based on the received RAN information.

Step S612: The UE establishes the connection to the USN.

The UE establishes a connection relationship with the USN based on the received USN information, or the USN establishes a connection relationship with the UE based on the received UE information.

Step S613: The NCF updates the USN information of the UE on the UDM/UDR.

Specifically, the default USN or the NCF sends the subscription obtaining request of the UE to the AUSF. The AUSF returns the authentication result to the default USN or the NCF in response to the subscription obtaining request of the UE. The default USN or the NCF sends the request for the subscription information of the UE to the UDM/UDR based on the authentication result. The UDM/UDR returns the subscription information to the default USN or the NCF. The subscription information of the UE is for determining the USN that provides the service for the UE, so that the USN information of the UE is updated on the UDM/UDR. This step is similar to steps S603 to S606, and details are not described herein again.

Step S614: The USN records update of and/or obtains subscription information of the UE.

Specifically, the newly created or selected USN obtains the subscription information of the UE from a data plane, where the subscription information of the UE is different from the UE subscription information(information about a USN granularity) in step S605 and step S606, and the subscription information of the UE obtained in this step is session-related subscription information, mobility management-related information, policy-related subscription information, and the like of the UE.

In this embodiment of this application, after the network function granularity-based subscription information is introduced, the network-side network element creates or selects the USN based on the network function granularity-based subscription information of the UE, and the created or selected USN may support the network capability corresponding to the network function granularity-based subscription information. Then, the created or selected USN obtains the network function granularity-based subscription of each UE from a data side, and provides a corresponding service for the UE based on the network function granularity-based subscription of the UE. Therefore, the subscription information of the UE does not need to be transmitted between different function network elements. This simplifies an information transmission procedure between networks, saves a large quantity of resources, reduces a security attack during information transmission, and improves information security.

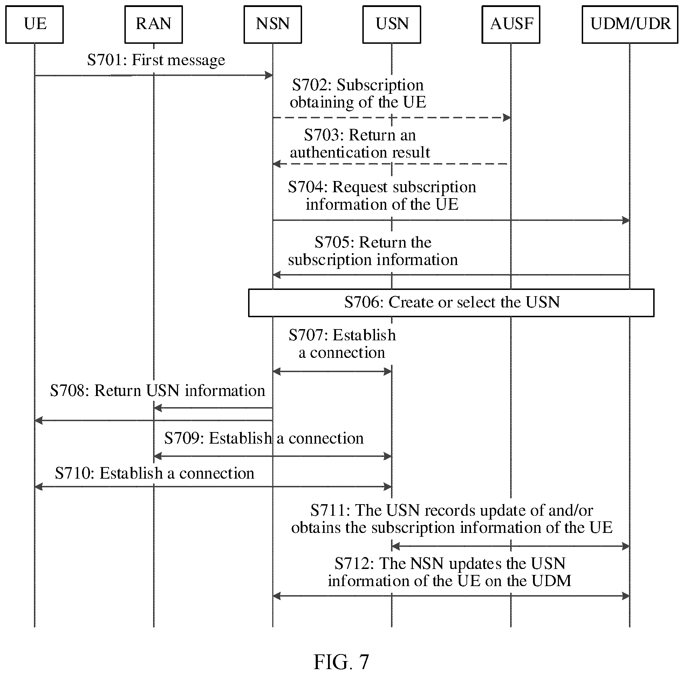

FIG. 7 is a schematic flowchart of another subscription management method according to an embodiment of this application, and may also be understood as a variation or a supplement to the flowchart of the subscription management method in FIG. 5 or FIG. 6.

As shown in FIG. 7, a communication system to which the subscription management method in this embodiment of this application is applied includes but is not limited to a UE, a RAN, an NSN, a USN, an AUSF, a UDM, or a UDR. The terminal device in FIG. 5 is equivalent to the UE in this embodiment of this application. The first network device in FIG. 5 is equivalent to the NSN in this embodiment of this application, and the NSN in this embodiment of this application may also be understood as equivalent to function integration of the NCF and the NSN in FIG. 6, to manage a resource of a user service node. The second network device in FIG. 5 is equivalent to the UDM or the UDR in this embodiment of this application, is consistent with FIG. 6, may also be understood as equivalent to function integration of the UDM and the AUSF in this embodiment of this application, and is configured to manage data such as subscription information and identifier information of a terminal device. Optionally, the network function or the target network function in FIG. 5 may be specifically the user service node in this embodiment of this application.

As shown in FIG. 7, the subscription management method in this embodiment of this application may include steps S701 to S712. An execution sequence of steps S701 to S712 is not limited in this embodiment of this application. Specifically, the subscription management method includes but is not limited to the following steps.

Step S701: The UE sends a first message to the NSN via the RAN.

This step is consistent with step S601 in FIG. 6, and details are not described herein again.

Step S702: The NSN sends a subscription obtaining request of the UE to the AUSF.

Similar to step S603 in FIG. 6, in this step, an execution body of "sending the subscription obtaining request of the UE to the AUSF" is changed to an access network element (an AMF or the NSN) or a user plane function network element (a UPF). In other words, the access network element (the AMF or the NSN) or the user plane function network element (the UPF) sends the subscription obtaining request of the UE to the AUSF. Therefore, details are not described herein again.

Step S703: The AUSF returns an authentication result to the NSN.

Similar to step S604 in FIG. 6, in this step, a receiving end to which "the AUSF returns the authentication result" is changed to the access network element (the AMF or the NSN) or the user plane function network element (the UPF). In other words, the AUSF returns the authentication result to the access network element (the AMF or the NSN) or the user plane function network element (the UPF). Therefore, details are not described herein again.

Step S704: The NSN sends a request for subscription information of the UE to the UDM/UDR.

Similar to step S605 in FIG. 6, in this step, an execution body of "sending the request for the subscription information of the UE to the UDM/UDR" is changed to the access network element (the AMF or the NSN) or the user plane function network element (the UPF). In other words, the access network element (the AMF or the NSN) or the user plane function network element (the UPF) sends the request for the subscription information of the UE to the UDM/UDR. Therefore, details are not described herein again.

Step S705: The UDM/UDR returns the subscription information to the NSN.

Similar to step S606 in FIG. 6, in this step, a receiving end to which "the UDM/UDR returns the subscription information" is changed to the access network element (the AMF or the NSN) or the user plane function network element (the UPF). In other words, the UDM/UDR returns the subscription information to the access network element (the AMF or the NSN) or the user plane function network element (the UPF). Therefore, details are not described herein again.

Step S706: The NSN creates or selects the USN.

This step is similar to step S607 in FIG. 6, and details are not described herein again.

Step S707: The NSN establishes a connection to the USN.

This step is consistent with step S609 in FIG. 6, and details are not described herein again.

Step S708: The NSN returns USN information to the RAN and/or the UE.

This step is consistent with step S610 in FIG. 6, and details are not described herein again.

Step S709: The RAN establishes a connection to the USN.

This step is consistent with step S611 in FIG. 6, and details are not described herein again.

Step S710: The UE establishes a connection to the USN.

This step is consistent with step S612 in FIG. 6, and details are not described herein again.

Step S711: The USN records update of and/or obtains subscription information of the UE.

Specifically, the newly created or selected USN obtains subscription information of the UE from a data plane, where the subscription information of the UE is different from the UE subscription information(information about a USN granularity) in step S704 and step S705, and the subscription information of the UE obtained in this step is session-related subscription information, mobility management-related information, policy-related subscription information, and the like of the UE.

Step S712: The NSN updates the USN information of the UE on the UDM/UDR.

Specifically, the NSN sends the subscription obtaining request of the UE to the AUSF. The AUSF returns the authentication result to the NSN in response to the subscription obtaining request of the UE. The NSN sends the request for the subscription information of the UE to the UDM/UDR based on the authentication result. The UDM/UDR returns the subscription information to the NSN. The subscription information of the UE is for determining the USN that provides a service for the UE, so that the USN information of the UE is updated on the UDM/UDR. This step is similar to steps S702 to S705, and details are not described herein again.

In this embodiment of this application, after the network function granularity-based subscription information is introduced, the network-side network element creates or selects the USN based on the network function granularity-based subscription information of the UE, and the created or selected USN may support a network capability corresponding to the network function granularity-based subscription information. Then, the created or selected USN obtains network function granularity-based subscription of each UE from a data side, and provides a corresponding service for the UE based on the network function granularity-based subscription of the UE. Therefore, the subscription information of the UE does not need to be transmitted between different function network elements. This simplifies an information transmission procedure between networks, saves a large quantity of resources, reduces a security attack during information transmission, and improves information security.

In addition, in comparison with FIG. 6, the USN in this embodiment of this application is created by the NSN. This further simplifies a network architecture, correspondingly simplifies the information transmission procedure between the networks, and saves the large quantity of transmission resources.

The foregoing describes in detail the methods provided in embodiments of this application with reference to FIG. 5 to FIG. 7.

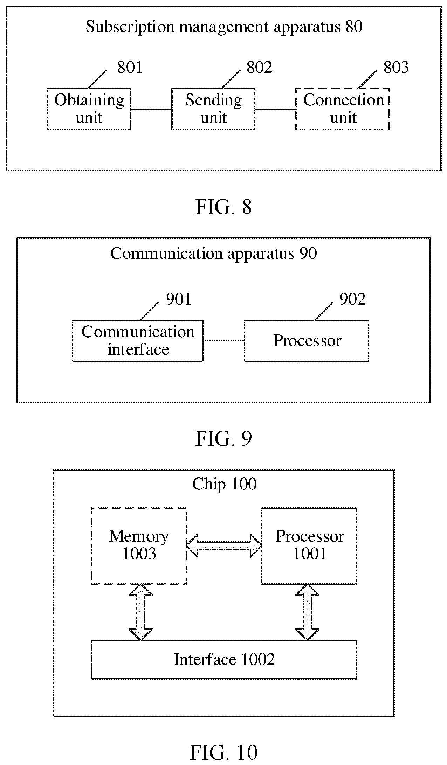

The following describes in detail apparatuses provided in embodiments of this application with reference to FIG. 8 to FIG. 10.

It may be understood that, to implement the functions in the foregoing embodiments, the first network device, the second network device, and the terminal device include corresponding hardware structures and/or software modules for performing the functions. A person skilled in the art should easily be aware that, in combination with the units and the method steps in the examples described in embodiments disclosed in this application, this application can be implemented by hardware, software, or a combination of hardware and software. Whether a function is performed by hardware, software, or hardware driven by computer software depends on particular application scenarios and design constraints of the technical solutions.

FIG. 8 is a diagram of a structure of a subscription management apparatus according to an embodiment of this application.

As shown in FIG. 8, the subscription management apparatus 80 may include an obtaining unit 801, a sending unit 802, and a connection unit 803. The obtaining unit 801, the sending unit 802, and the connection unit 803 may be software, hardware, or a combination of software and hardware.

The obtaining unit 801 is configured to implement a receiving function, the sending unit 802 is configured to implement a sending function, the obtaining unit 801 and the sending unit 802 may be integrated into one transceiver unit, and the transceiver unit may implement the sending function and/or the receiving function. The transceiver unit may alternatively be described as a communication unit. Optionally, the transceiver unit may be configured to receive information sent by another apparatus, and may be further configured to send information to another apparatus.

In a possible design, the subscription management apparatus 80 may correspond to the first network device in the method embodiment shown in FIG. 5. For example, the subscription management apparatus 80 may be the first network device, or may be a chip in the first network device. The subscription management apparatus 80 may include units configured to perform the operations performed by the first network device in the foregoing method embodiment shown in FIG. 5. In addition, the units in the subscription management apparatus 80 are separately configured to implement the operations performed by the first network device in the foregoing method embodiment shown in FIG. 5. The units are described as follows:

The obtaining unit 801 is configured to obtain a first message, where the first message includes identifier information corresponding to a terminal device.

The sending unit 802 is configured to send a second message to a second network device, where the second message is for requesting subscription information corresponding to the identifier information, the subscription information is for determining a target network function, and the target network function has a network capability indicated by the subscription information.

In this embodiment of this application, a subscription management method is provided. Specifically, the subscription management apparatus obtains the first message, where the first message includes but is not limited to the identifier information corresponding to the terminal device; and the subscription management apparatus sends the second message to the second network device in response to the first message, where the second message is for requesting the subscription information corresponding to the identifier information of the terminal device. The subscription management apparatus is a network control function device, or a network device integrating a network control function, for example, an access management network element, may manage a resource of a user service node, and may specifically perform operations such as generation, change, and elimination on the user service node. The user service node may be understood as a core network element that integrates a core network control function and provides a dedicated service for the terminal device, or may be understood as a type of cloud server. The terminal device may orchestrate, on the user service node, resources provided by an operator. The second network device is a unified data management device, and may be specifically a data plane network element in a core network, and is configured to manage data such as the subscription information and the identifier information of the terminal device. Correspondingly, the second network device stores subscription or authorization data of the terminal device, and stores application-related data.

A current core network is designed based on network element logic. Different function network elements serving the terminal device (user) need to separately obtain the subscription information of the terminal device from the data plane network element, to provide a corresponding service for the terminal device. However, in a process in which the subscription information of the terminal device is transmitted between the foregoing different function network elements, a large quantity of resources are consumed, and there is a security attack problem. Consequently, information security is low.

However, in this embodiment of this application, the subscription management apparatus requests, based on the identifier information of the terminal device, the second network device to obtain the subscription information corresponding to the identifier information. A network function granularity of the subscription information may be used for determining the target network function, and the determined target network function has the network capability corresponding to the network function granularity of the subscription information, so that the target network function can provide, for the terminal device, services for a plurality of services required by the terminal device. The target network function in this embodiment of this application may be specifically the user service node. In comparison with a conventional technology, in this embodiment of this application, the subscription information does not need to be transmitted between different function network elements. This simplifies an information transmission procedure between networks, saves the large quantity of resources, reduces a security attack during information transmission, and improves the information security.

In a possible implementation, the subscription information includes two or more parameters, and the two or more parameters represent a network capability for providing services for two or more services.

In a possible implementation, the apparatus further includes:
the obtaining unit 801, further configured to obtain the subscription information; and
a connection unit 803, configured to establish a connection relationship with the target network function based on the subscription information.

In a possible implementation, the first message further includes a network function creation message, and the network function creation message indicates to create, when the target network function does not exist, a network function that has the network capability indicated by the subscription information as the target network function.

In a possible implementation, the sending unit 802 is further configured to send an authentication request to the second network device, where the authentication request is for requesting to perform authentication on the identifier information, or is for requesting to perform authentication and authorization on an operation of obtaining the subscription information.

In a possible implementation, the second message includes authentication information of the second network device, and the authentication information represents that the authentication on the identifier information is completed, or the authentication and the authorization on the operation of obtaining the subscription information are completed.

In a possible implementation, the sending unit 802 is further configured to send information about the target network function to the terminal device, where the information about the target network function is for the terminal device to establish the connection relationship with the target network function, and there is a mapping relationship between the information about the target network function and the identifier information of the terminal device.

In a possible implementation, the first message further includes type information of the network function, and the type information of the network function indicates the network function requested by the terminal device.

In a possible implementation, the second message is further for requesting policy information corresponding to the identifier information, and the policy information is for determining the target network function.

In another possible design, the subscription management apparatus 80 may correspond to the second network device in the method embodiment shown in FIG. 5. For example, the subscription management apparatus 80 may be the second network device, or may be a chip in the second network device. The subscription management apparatus 80 may include units configured to perform the operations performed by the second network device in the method embodiment shown in FIG. 5. In addition, the units in the subscription management apparatus 80 are separately configured to implement the operations performed by the second network device in the foregoing method embodiment shown in FIG. 5. The units are described as follows:

The obtaining unit 801 is configured to obtain a second message sent by a first network device, where the second message is for requesting subscription information corresponding to identifier information of a terminal device, the subscription information is for determining a target network function, and the target network function has a network capability indicated by the subscription information; and
the sending unit 802 is configured to send the subscription information to the first network device based on the second message.

In this embodiment of this application, a subscription management method is provided. Specifically, the subscription management apparatus obtains the second message sent by the first network device, where the second message is for requesting the subscription information corresponding to the identifier information of the terminal device. The subscription management apparatus sends, to the first network device in response to the second message, the subscription information corresponding to the identifier information of the terminal device, where the subscription information may determine the target network function, and the target network function may be used for providing services for a plurality of services requested by the terminal device. The first network device is a network control function device, or a network device integrating a network control function, for example, an access management network element, may manage a resource of a user service node, and may specifically perform operations such as generation, change, and elimination on the user service node. The user service node may be understood as a core network element that integrates a core network control function and provides a dedicated service for the terminal device, or may be understood as a type of cloud server. The terminal device may orchestrate, on the user service node, resources provided by an operator. The subscription management apparatus is a unified data management device, and may be specifically a data plane network element in a core network, and is configured to manage data such as the subscription information and the identifier information of the terminal device. Correspondingly, the subscription management apparatus stores subscription or authorization data of the terminal device, and stores application-related data.

A current core network is designed based on network element logic. Different function network elements serving the terminal device (user) need to separately obtain the subscription information of the terminal device from the data plane network element, to provide a corresponding service for the terminal device. However, in a process in which the subscription information of the terminal device is transmitted between the foregoing different function network elements, a large quantity of resources are consumed, and there is a security attack problem. Consequently, information security is low.

However, in this embodiment of this application, the subscription management apparatus sends, to the first network device in response to the second message, the subscription information corresponding to the identifier information of the terminal device, and the network function granularity-based subscription information may be used for determining the target network function. The determined target network function has the network capability corresponding to the network function granularity of the subscription information, so that the target network function can provide, for the terminal device, the services for the plurality of services required by the terminal device. The target network function in this embodiment of this application may be specifically the user service node. In comparison with the conventional technology, in this embodiment of this application, the subscription information does not need to be transmitted between different function network elements. This simplifies an information transmission procedure between networks, saves the large quantity of resources, reduces a security attack during information transmission, and improves the information security.

In a possible implementation, the subscription information includes two or more parameters, and the two or more parameters represent a network capability for providing services for two or more services.

In a possible implementation, the obtaining unit 801 is further configured to obtain an authentication request sent by the first network device, where the authentication request is for requesting to perform authentication on the identifier information, or is for requesting to perform authentication and authorization on an operation of obtaining the subscription information by the first network device; and
the sending unit 802 is further configured to send authentication information to the first network device in response to the authentication request, where the authentication information represents that the authentication on the identifier information is completed, or the authentication and the authorization on the operation of obtaining the subscription information by the first network device are completed.

In a possible implementation, the sending unit 802 is specifically configured to: when the second message includes the authentication information of the subscription management apparatus, send the subscription information to the first network device, where the authentication information represents that the authentication on the identifier information is completed, or the authentication and the authorization on the operation of obtaining the subscription information are completed.

In another possible design, the subscription management apparatus 80 may correspond to the terminal device in the method embodiment shown in FIG. 5. For example, the subscription management apparatus 80 may be the terminal device, or may be a chip in the terminal device. The subscription management apparatus 80 may include units configured to perform the operations performed by the terminal device in the foregoing method embodiment shown in FIG. 5. In addition, the units in the subscription management apparatus 80 are separately configured to implement the operations performed by the terminal device in the foregoing method embodiment shown in FIG. 5. The units are described as follows:

The sending unit 802 is configured to send a first message to a first network device, where the first message includes identifier information corresponding to the subscription management apparatus, subscription information corresponding to the identifier information is for determining a target network function, and the target network function has a network capability indicated by the subscription information; and
the obtaining unit 801 is configured to obtain information that is about the target network function and that is sent by the first network device.

In this embodiment of this application, a subscription management method is provided. Specifically, a subscription management apparatus sends the first message to the first network device, where the first message includes the identifier information of the subscription management apparatus; and then the subscription management apparatus obtains the information that is about the target network function and that is sent by the first network device. The target network function has the network capability indicated by the subscription information corresponding to the identifier information, and may provide corresponding services for a plurality of services requested by the subscription management apparatus. The first network device is a network control function device, or a network device integrating a network control function, for example, an access management network element, may manage a resource of a user service node, and may specifically perform operations such as generation, change, and elimination on the user service node. The user service node may be understood as a core network element that integrates a core network control function and provides a dedicated service for the subscription management apparatus, or may be understood as a type of cloud server. The subscription management apparatus may orchestrate, on the user service node, resources provided by an operator.

A current core network is designed based on network element logic. Different function network elements serving the subscription management apparatus (user) need to separately obtain the subscription information of the subscription management apparatus from a data plane network element, to provide a corresponding service for the subscription management apparatus. However, in a process in which the subscription information of the subscription management apparatus is transmitted between the foregoing different function network elements, a large quantity of resources are consumed, and there is a security attack problem. Consequently, information security is low.

However, in this embodiment of this application, the first message sent by the subscription management apparatus to the first network device includes the identifier information corresponding to the terminal device, the subscription information corresponding to the identifier information is for determining the target network function, and the obtained the target network function sent by the first network device may provide the corresponding services for the plurality of services requested by the subscription management apparatus. The target network function in this embodiment of this application may be specifically the user service node. In comparison with the conventional technology, in this embodiment of this application, the subscription management apparatus does not need to obtain different function network elements to provide corresponding services. This simplifies an information transmission procedure between networks, saves the large quantity of resources, reduces a security attack during information transmission, and improves the information security.

In a possible implementation, the subscription information includes two or more parameters, and the two or more parameters represent a network capability for providing services for two or more services.

In a possible implementation, the apparatus further includes:
a connection unit 803, configured to establish a connection relationship with the target network function based on the information about the target network function, where there is a mapping relationship between the information about the target network function and the identifier information of the subscription management apparatus.

In a possible implementation, the first message further includes a network function creation message, and the network function creation message indicates to create, when the target network function does not exist, a network function that has the network capability indicated by the subscription information as the target network function.

According to this embodiment of this application, the units in the apparatus shown in FIG. 8 may be separately or all combined into one or more other units, or one or more units in the apparatus may be further split into a plurality of units with more detailed functions. This can implement a same operation without affecting implementation of technical effects of this embodiment of this application. The foregoing units are obtained through division based on logical functions. In actual application, a function of one unit may be implemented by a plurality of units, or functions of a plurality of units are implemented by one unit. In another embodiment of this application, a network device may alternatively include another unit. In actual application, the functions may be implemented with assistance of the another unit, and may be implemented by a plurality of units in collaboration.

It should be noted that, for implementation of each unit, reference may be further made to corresponding descriptions in the method embodiments shown in FIG. 5, FIG. 6, and FIG. 7.

For the subscription management apparatus 80 described in FIG. 8, the first network device requests, based on the identifier information of the terminal device, the second network device to obtain the subscription information corresponding to the identifier information. A network function granularity of the subscription information may be used for determining the target network function, and the determined target network function may support the network capability corresponding to the network function granularity of the subscription information, so that the target network function can provide, for the terminal device, the services for the plurality of services required by the terminal device. In this embodiment of this application, the subscription information does not need to be transmitted between different function network elements. This simplifies the information transmission procedure between the networks, saves the large quantity of resources, reduces the security attack during information transmission, and improves the information security.

FIG. 9 is a diagram of a structure of a communication apparatus according to an embodiment of this application.

It should be understood that the communication apparatus 90 shown in FIG. 9 is merely an example. The communication apparatus in this embodiment of this application may further include other components, may include components having functions similar to those of components in FIG. 9, or may not necessarily include all components in FIG. 9.

The communication apparatus 90 includes a communication interface 901 and at least one processor 902.

The communication apparatus 90 may correspond to any network element or device in a first network device, a second network device, or a terminal device. The communication interface 901 is configured to receive and send a signal, and the at least one processor 902 executes program instructions, so that the communication apparatus 90 implements a corresponding procedure of the method performed by a corresponding network element in the foregoing method embodiments.

In a possible design, the communication apparatus 90 may correspond to the first network device in the method embodiment shown in FIG. 5. For example, the communication apparatus 90 may be the first network device, or may be a chip in the first network device. The communication apparatus 90 may include components configured to perform the operations performed by the first network device in the foregoing method embodiments. In addition, the components in the communication apparatus 90 are separately configured to implement the operations performed by the first network device in the foregoing method embodiments. Details may be as follows:
obtaining a first message, where the first message includes identifier information corresponding to a terminal device; and
sending a second message to a second network device, where the second message is for requesting subscription information corresponding to the identifier information, the subscription information is for determining a target network function, and the target network function has a network capability indicated by the subscription information.

In a possible implementation, the subscription information includes two or more parameters, and the two or more parameters represent a network capability for providing services for two or more services.

In a possible implementation, the method further includes:
obtaining the subscription information; and
establishing a connection relationship with the target network function based on the subscription information.

In a possible implementation, the first message further includes a network function creation message, and the network function creation message indicates to create, when the target network function does not exist, a network function that has the network capability indicated by the subscription information as the target network function.

In a possible implementation, before the sending a second message to a second network device, the method further includes:
sending an authentication request to the second network device, where the authentication request is for requesting to perform authentication on the identifier information, or is for requesting to perform authentication and authorization on an operation of obtaining the subscription information.

In a possible implementation, the second message includes authentication information of the second network device, and the authentication information represents that the authentication on the identifier information is completed, or the authentication and the authorization on the operation of obtaining the subscription information are completed.

In a possible implementation, the method further includes:
sending information about the target network function to the terminal device, where the information about the target network function is for the terminal device to establish a connection relationship with the target network function, and there is a mapping relationship between the information about the target network function and the identifier information of the terminal device.

In a possible implementation, the first message further includes type information of the network function, and the type information of the network function indicates the network function requested by the terminal device.

In a possible implementation, the second message is further for requesting policy information corresponding to the identifier information, and the policy information is for determining the target network function.

In another possible design, the communication apparatus 90 may correspond to the second network device in the method embodiment shown in FIG. 5. For example, the communication apparatus 90 may be the second network device, or may be a chip in the second network device. The communication apparatus 90 may include components configured to perform the operations performed by the second network device in the foregoing method embodiments. In addition, the components in the communication apparatus 90 are separately configured to implement the operations performed by the second network device in the foregoing method embodiments. Details may be as follows:
obtaining a second message sent by a first network device, where the second message is for requesting subscription information corresponding to identifier information of a terminal device, the subscription information is for determining a target network function, and the target network function has a network capability indicated by the subscription information; and
sending the subscription information to the first network device based on the second message.

In a possible implementation, the subscription information includes two or more parameters, and the two or more parameters represent a network capability for providing services for two or more services.

In a possible implementation, before the obtaining a second message sent by a first network device, the method further includes:
obtaining an authentication request sent by the first network device, where the authentication request is for requesting to perform authentication on the identifier information, or is for requesting to perform authentication and authorization on an operation of obtaining the subscription information by the first network device; and
sending authentication information to the first network device in response to the authentication request, where the authentication information represents that the authentication on the identifier information is completed, or the authentication and the authorization on the operation of obtaining the subscription information by the first network device are completed.

In a possible implementation, the sending the subscription information to the first network device based on the second message includes:
when the second message includes the authentication information of the second network device, sending the subscription information to the first network device, where the authentication information represents that the authentication on the identifier information is completed, or the authentication and the authorization on the operation of obtaining the subscription information are completed.

In another possible design, the communication apparatus 90 may correspond to the terminal device in the method embodiment shown in FIG. 5. For example, the communication apparatus 90 may be the terminal device, or may be a chip in the terminal device. The communication apparatus 90 may include components configured to perform the operations performed by the terminal device in the foregoing method embodiments. In addition, the components in the communication apparatus 90 are separately configured to implement the operations performed by the terminal device in the foregoing method embodiments. Details may be as follows:
sending a first message to a first network device, where the first message includes identifier information corresponding to the terminal device, subscription information corresponding to the identifier information is for determining a target network function, and the target network function has a network capability indicated by the subscription information; and
obtaining information that is about the target network function and that is sent by the first network device.

In a possible implementation, the subscription information includes two or more parameters, and the two or more parameters represent a network capability for providing services for two or more services.

In a possible implementation, the method further includes:
establishing a connection relationship with the target network function based on the information about the target network function, where there is a mapping relationship between the information about the target network function and the identifier information of the terminal device.

In a possible implementation, the first message further includes a network function creation message, and the network function creation message indicates to create, when the target network function does not exist, a network function that has the network capability indicated by the subscription information as the target network function.

For the communication apparatus 90 described in FIG. 9, the first network device requests, based on the identifier information of the terminal device, the second network device to obtain the subscription information corresponding to the identifier information. A network function granularity of the subscription information may be used for determining the target network function, and the determined target network function may support the network capability corresponding to the network function granularity of the subscription information, so that the target network function can provide, for the terminal device, services for a plurality of services required by the terminal device. In this embodiment of this application, the subscription information does not need to be transmitted between different function network elements. This simplifies an information transmission procedure between networks, saves a large quantity of resources, reduces a security attack during information transmission, and improves information security.

When the communication apparatus may be a chip or a chip system, refer to a diagram of a structure of a chip shown in FIG. 10.

As shown in FIG. 10, the chip 100 includes a processor 1001 and an interface 1002. There may be one or more processors 1001, and there may be a plurality of interfaces 1002. It should be noted that a function corresponding to each of the processor 1001 and the interface 1002 may be implemented by using a hardware design, or may be implemented by using a software design, or may be implemented by combining software and hardware. This is not limited herein.

Optionally, the chip 100 may further include a memory 1003, and the memory 1003 is configured to store necessary program instructions and data.

In this application, the processor 1001 may be configured to invoke, from the memory 1003, a program for implementing the subscription management method provided in one or more embodiments of this application on one or more devices or network elements of the first network device, the second network device, or the terminal device, and execute the instructions included in the program. The interface 1002 may be configured to output an execution result of the processor 1001. In this application, the interface 1002 may be specifically configured to output messages or information of the processor 1001.

For the subscription management method provided in one or more embodiments of this application, refer to the embodiments shown in FIG. 5, FIG. 6, and FIG. 7. Details are not described herein again.

The processor in this embodiment of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

The memory in this embodiment of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the method provided in embodiments of this application, an embodiment of this application further provides a computer-readable storage medium. The computer-readable storage medium stores a computer program. When the computer program is run on one or more processors, the methods shown in FIG. 5, FIG. 6, and FIG. 7 may be implemented.

According to the method provided in embodiments of this application, this application further provides a computer program product. The computer program product includes a computer program. When the computer program is run on a computer, the methods shown in FIG. 5, FIG. 6, and FIG. 7 may be implemented.

An embodiment of this application further provides a system. The system includes at least one, for example, the subscription management apparatus 80, the communication apparatus 90, or the chip 100, and is configured to perform the steps performed by the corresponding network elements in any one of the embodiments in FIG. 5, FIG. 6, and FIG. 7.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processor unit (central processor unit, CPU), may be a network processor (network processor, NP), may be a digital signal processor (digital signal processor, DSP), may be a micro controller unit (micro controller unit, MCU), and may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification is intended to include, but not limited to, these memories and any memory of another proper type.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state disc, SSD)), or the like.

The first network device, the second network device, and the terminal device in the foregoing apparatus embodiments completely correspond to the first network device, the second network device, and the terminal device in the method embodiments, and corresponding modules or units perform corresponding steps. For example, the communication unit (transceiver) performs the steps of receiving or sending in the method embodiments, and the processing unit (processor) may perform the steps other than the sending and receiving steps. For a function of a specific unit, refer to a corresponding method embodiment. There may be one or more processors.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that in embodiments of this application, numbers "first", "second", and the like are merely used to distinguish between different objects, for example, to distinguish between different network devices, and constitute no limitation on the scope of embodiments of this application. Embodiments of this application are not limited thereto.

It should be further understood that in this application, "when" and "if" both refer to corresponding processing performed by the network element in an objective case, are not intended to limit time, do not require a determining action to be performed during implementation of the network element, and do not imply that there is any other limitation.

It should be further understood that in embodiments of this application, "B corresponding to A" represents that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that, in embodiments of this application, the first network device, the second network device, and the terminal device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A subscription management method, comprising:
obtaining, by a first network device, a first message, wherein the first message comprises identifier information corresponding to a terminal device; and
sending, by the first network device, a second message to a second network device, wherein the second message is for requesting subscription information corresponding to the identifier information, the subscription information is for determining a target network function, and the target network function has a network capability indicated by the subscription information.

2. The method according to claim 1, wherein the subscription information comprises two or more parameters, and the two or more parameters represent a network capability for providing services for two or more services.

3. The method according to claim 1 or 2, wherein the method further comprises:
obtaining the subscription information; and
establishing a connection relationship with the target network function based on the subscription information.

4. The method according to any one of claims 1 to 3, wherein the first message further comprises a network function creation message, and the network function creation message indicates to create, when the target network function does not exist, a network function that has the network capability indicated by the subscription information as the target network function.

5. The method according to any one of claims 1 to 4, wherein the second message comprises authentication information of the second network device, and the authentication information represents that authentication on the identifier information is completed, or authentication and authorization on an operation of obtaining the subscription information are completed.

6. The method according to claim 3, wherein the method further comprises:
sending information about the target network function to the terminal device, wherein the information about the target network function is for the terminal device to establish the connection relationship with the target network function, and there is a mapping relationship between the information about the target network function and the identifier information of the terminal device.

7. A subscription management method, comprising:
obtaining, by a second network device, a second message sent by a first network device, wherein the second message is for requesting subscription information corresponding to identifier information of a terminal device, the subscription information is for determining a target network function, and the target network function has a network capability indicated by the subscription information; and
sending, by the second network device, the subscription information to the first network device based on the second message.

8. The method according to claim 7, wherein the subscription information comprises two or more parameters, and the two or more parameters represent a network capability for providing services for two or more services.

9. The method according to claim 7 or 8, wherein the sending the subscription information to the first network device based on the second message comprises:
when the second message comprises authentication information of the second network device, sending the subscription information to the first network device, wherein the authentication information represents that authentication on the identifier information is completed, or authentication and authorization on an operation of obtaining the subscription information are completed.

10. A subscription management method, comprising:
sending, by a terminal device, a first message to a first network device, wherein the first message comprises identifier information corresponding to the terminal device, subscription information corresponding to the identifier information is for determining a target network function, and the target network function has a network capability indicated by the subscription information; and
obtaining, by the terminal device, information that is about the target network function and that is sent by the first network device.

11. The method according to claim 10, wherein the subscription information comprises two or more parameters, and the two or more parameters represent a network capability for providing services for two or more services.

12. The method according to claim 10 or 11, wherein the method further comprises:
establishing a connection relationship with the target network function based on the information about the target network function, wherein there is a mapping relationship between the information about the target network function and the identifier information of the terminal device.

13. The method according to any one of claims 10 to 12, wherein the first message further comprises a network function creation message, and the network function creation message indicates to create, when the target network function does not exist, a network function that has the network capability indicated by the subscription information as the target network function.

14. A subscription management apparatus, comprising:
an obtaining unit, configured to obtain a first message, wherein the first message comprises identifier information corresponding to a terminal device; and
a sending unit, configured to send a second message to a second network device, wherein the second message is for requesting subscription information corresponding to the identifier information, the subscription information is for determining a target network function, and the target network function has a network capability indicated by the subscription information.

15. The apparatus according to claim 14, wherein the subscription information comprises two or more parameters, and the two or more parameters represent a network capability for providing services for two or more services.

16. The apparatus according to claim 14 or 15, wherein the apparatus further comprises:
the obtaining unit, further configured to obtain the subscription information; and
a connection unit, configured to establish a connection relationship with the target network function based on the subscription information.

17. The apparatus according to any one of claims 14 to 16, wherein the first message further comprises a network function creation message, and the network function creation message indicates to create, when the target network function does not exist, a network function that has the network capability indicated by the subscription information as the target network function.

18. The apparatus according to any one of claims 14 to 17, wherein the second message comprises authentication information of the second network device, and the authentication information represents that authentication on the identifier information is completed, or authentication and authorization on an operation of obtaining the subscription information are completed.

19. The apparatus according to claim 16, wherein the sending unit is further configured to send information about the target network function to the terminal device, wherein the information about the target network function is for the terminal device to establish the connection relationship with the target network function, and there is a mapping relationship between the information about the target network function and the identifier information of the terminal device.

20. A subscription management apparatus, comprising:
an obtaining unit, configured to obtain a second message sent by a first network device, wherein the second message is for requesting subscription information corresponding to identifier information of a terminal device, the subscription information is for determining a target network function, and the target network function has a network capability indicated by the subscription information; and
a sending unit, configured to send the subscription information to the first network device based on the second message.

21. The apparatus according to claim 20, wherein the subscription information comprises two or more parameters, and the two or more parameters represent a network capability for providing services for two or more services.

22. The apparatus according to claim 20 or 21, wherein the sending unit is specifically configured to: when the second message comprises authentication information of the subscription management apparatus, send the subscription information to the first network device, wherein the authentication information represents that authentication on the identifier information is completed, or authentication and authorization on an operation of obtaining the subscription information are completed.

23. A subscription management apparatus, comprising:
a sending unit, configured to send a first message to a first network device, wherein the first message comprises identifier information corresponding to the subscription management apparatus, subscription information corresponding to the identifier information is for determining a target network function, and the target network function has a network capability indicated by the subscription information; and
an obtaining unit, configured to obtain information that is about the target network function and that is sent by the first network device.

24. The apparatus according to claim 23, wherein the subscription information comprises two or more parameters, and the two or more parameters represent a network capability for providing services for two or more services.

25. The apparatus according to claim 23 or 24, wherein the apparatus further comprises:
a connection unit, configured to establish a connection relationship with the target network function based on the information about the target network function, wherein there is a mapping relationship between the information about the target network function and the identifier information of the subscription management apparatus.

26. The apparatus according to any one of claims 23 to 25, wherein the first message further comprises a network function creation message, and the network function creation message indicates to create, when the target network function does not exist, a network function that has the network capability indicated by the subscription information as the target network function.

27. A communication apparatus, comprising a processor, wherein
when the processor invokes a computer program or instructions in a memory, the method according to any one of claims 1 to 6, the method according to any one of claims 7 to 9, or the method according to any one of claims 10 to 13 is performed.

28. A communication apparatus, comprising a processor, a memory, and a communication interface, wherein
the communication interface is configured to receive information or send information;
the memory is configured to store program code; and
the processor is configured to invoke the program code from the memory to perform the method according to any one of claims 1 to 6, the method according to any one of claims 7 to 9, or the method according to any one of claims 10 to 13.

29. A computer-readable storage medium, wherein
the computer-readable storage medium is configured to store instructions or a computer program; and when the instructions or the computer program is executed, the method according to any one of claims 1 to 6 is implemented, the method according to any one of claims 7 to 9 is implemented, or the method according to any one of claims 10 to 13 is implemented.

30. A computer program product, comprising instructions or a computer program, wherein when the instructions or the computer program is executed, the method according to any one of claims 1 to 6 is implemented, the method according to any one of claims 7 to 9 is implemented, or the method according to any one of claims 10 to 13 is implemented.

31. A communication system, wherein the communication system comprises a first network device, a second network device, and a terminal device, the first network device is configured to perform the method according to any one of claims 1 to 6, the second network device is configured to perform the method according to any one of claims 7 to 9, and the terminal device is configured to perform the method according to any one of claims 10 to 13.
